# EUROPEAN PATENT APPLICATION

(11) **EP 2 484 720 A1**
(43) Date of publication of application: **08.08.2012**
(21) Application number: 10819805.2
(22) Date of filing: 30.09.2010
(51) Int. Cl.: C08J 11/10, C08L 17/00

(54) **THERMAL REGENERATION METHOD OF WASTE RUBBER**

(30) Priority: 30.09.2009 CN 200910179396; 22.07.2010 CN 201010241289; 09.09.2010 CN 201010276906
(71) Applicant: Chen, Huihong, Shanghai 200237 (CN); Hu, Jiaqing, Shanghai 200233 (CN)
(72) Inventor: Chen, Huihong, Shanghai 200237 (CN); Hu, Jiaqing, Shanghai 200233 (CN)
(74) Representative: Bond, Christopher William
(86) International application number: PCT/CN2010/001535
(87) International publication number: WO 2011/038576

(57) **Abstract**

A thermal regeneration method of waste rubber, comprises: adding a feedstock of waste rubber raw powder, environmentally-friendly softener and powdery adjuvant into an agitating heater, wherein the weight ratio thereof is 100 / 8~15 / 20~1500, firstly heating under oxygen insulation condition, then introducing into an agitating cooler and cooling to 100°C or less, discharging so as to obtain the product; or a part or all of powdery adjuvant in the feedstock is not added to the agitating heater together with other components in the feedstock at the same time, but is added to the agitating heater before discharging the feedstock which was added to the agitating heater previously, and/or is added while introducing the heated feedstock into an agitating cooler; or introducing a pre-formulated feedstock into a screw extruder, cooling the feedstock to 100°C or less after passing the heating section, mixing section, then discharging so as to obtain the product. Optionally, the said thermal regeneration method has multi-direction transfer relationship on feedstock and energy with well-known pyrolysis of waste rubber or plus a process for preparing carbon black from the flammable fuel or flammable gas.

## Description

### Field of technique

This invention proposes one method of thermal regeneration of waste rubber, which belongs to technique scope of waste rubber regeneration processing and utilization.

### Background of technique

Today, the era features recycling economy and sustainable development. The waste rubber regeneration should have been a sunshine industry that must be forcefully developed for practicing recycling economy and sustainable development, economic build and national rejuvenation in a heavily-polluted country with resource scarcity. However, the regeneration technique concerning waste tire rubber exceeding 60% waste rubber aggregate is not fully-fledged, in particular, the technique of regeneration rubber via grinding, separation, high-temperature desulphurizing, the so-called "thermal regeneration" technique is not adequately developed. Therefore, China's more than 70% enterprises involving in regeneration rubber production through waste tire has been all along in a status of tiny profit or not profit, little progress in cost performance ratio, heavy poisonous dust and pollution and huge power consumption. With reference to rise and fall track of regeneration rubber industry of overseas developed countries, it seems that China's waste tire-based regeneration rubber will follow overseas step and become a sunset industry with faint development prospective.

Although the so-called thermal regeneration technique by treating waste tire via traditional grinding, separate, high-temperature desulphurizing, normal-temperature refinery or via latest grinding, separation, high-temperature creaming or adding common carbon black into cream slurry has serious process and product deficiencies, including polluted low-value utilization of nylon fibrous skeleton, environmental peril of softener toxin and low recovery rate of rubber material regeneration, this thermal regeneration-based rubber material or product with regeneration rubber has higher elongation since the majority of rubber hydrocarbon chain has been restored to linear shape after the it has been refined by high-temperature heat and shearing force or swelled into cream slurry by large-dosage high-temperature thermal solvent. Such an advantage is neither available in fine or super fine rubber powder obtained by normal-temperature or low-temperature freezing nor available in plastic rubber powder only through high-temperature or normal-temperature plastic treatment instead of roller shearing force or reinforced swelling via large-dosage high-temperature thermal solvent. Therefore, thermal regeneration rubber is popular with downstream users highlighting big product elongation. The thermal regeneration of waste rubber is to meet common indicators of sustainable development through innovation and improvement, that is, as long as thermal regeneration of waste rubber, including waste tire can meet resource recycling requirements of full volume, greening, high value and energy saving, the industry of thermal regeneration of waste rubber can gain new vitality.

The literature for the resource-recycling scheme of full volume, greening, high value and energy saving is firstly launched to apply for China patent (200810083330.6). This scheme makes combined implementation of various existing processes for utilization of waste rubber products, including waste tire so that separate and competitive regeneration processes come into proportionally coordination process. The scheme of waste tire regeneration excludes low-value nylon skeleton fiber and solution for low-value thermal cracking carbon black. The high-value products obtained include: steel wire, waste tire thermal cracking fuel oil or fractionated oil product thereof, mixture of 100-mesh powder and thermal-cracking carbon black of waste tire rubber, the so-called super fine rubber powder master batch, etc. This scheme also integrates utilization of waste tire rubber and production of common carbon black by thermal cracking of common fuel oil and gas so that the energy consumption of discharged by-product and energy emission of by-product consumption are organically integrated. In terms of high-value development of regeneration products of waste tire rubber, this scheme prefers varieties without roller refinery and is free from improvement on thermal regeneration of waste tire and other waste rubber, that is, this scheme is still not capable of including the so-called thermal process, the production of regeneration rubber with 5~40-mesh sieve via high-temperature desulphurizing, normal-temperature refinery.

Latest improvements on thermal regeneration of waste tire rubber and products thereof:
As specified in China's applied patent (200710150962.5), use 20~50-mesh vulcanized rubber powder, add softener with specified constituents with weight 60~115% that of rubber powder into pressure heating mixing tank and conduct insulated thermal regeneration under 160~200C, 0.5~0.7Mpa for 2~3 hours. When the rubber powder turns into cream syrup, add carbon black with weight 60~100% that of rubber powder so that the cream-like regenerative rubber with carbon black turns out; The aforesaid carbon black only refers to highly abrasive carbon black or universal furnace carbon black; the used softener (so-called fuel oil) only refers to pine tar, oxidization tall oil or coal tar, all of which belongs to odorous polluted softener. The patent doesn't cover used equipment as well as composite equipment that conform to cleaning production requirement.

Again, as specified in China's applied patent (200710024356.9), use 40-mesh tire rubber powder, add softener with specified constituents with weight 21~30% that of rubber powder into pressure heating mixing tank and conduct insulated thermal regeneration under 240~260°C, 2.6~3.MPa for less than 1 hours. When the cooled loose cake-shaped rubber powder will be refined to turn out high-strength regeneration rubber product with tensile strength at break 12~18 MPa; the softener covered in this patent only includes solid coal tar, which is odorous polluted softener.

Again, as specified in China's applied patent (200710192039.8), use 20-mesh tire rubber powder, add softener with specified constituents with weight 20.54~25.1 % that of rubber powder into pressure heating mixing tank and conduct insulated thermal regeneration under steam pressure 0.6~1.0MPa for 20~40 m. When the cooled loose cake-shaped rubber powder will be refined to turn out high-strength regeneration rubber product with tensile strength at break 15~16 MPa; the softener covered in this patent only includes tall oil, coal pitch, etc, which is odorous polluted softener.

Once again, as specified in China's applied patent (200810146444.0), it's a rubber's instant activation reduction method, whose characteristics lie in: a adjustable pressure column that is compatible with rubber powder of various particle sizes; b shear force formed by one big and one small rotary screw; c interaction between shear force and instant friction-based high temperature; d sealed space water cooling; accelerate thermal oxygen depolymerization by e, S reagent, free from cracking by hot temperature. In this applied patent, the heat for rubber material comes from friction driven by motor; the heat fees must exceed that for direct fuel heat or waste heat. Besides, the applied case doesn't clearly describe S agent or product beyond GB, besides, the schematic drawing for rotary screw is not clear-cut. Therefore, the opening of this applied case has not reached the level where the ordinary technician is capable of remodeling invention without creative effort.

Besides, the existing regeneration rubber technology still can't realize true resources recycling for low rubber or/and mixed low-level waste rubber resources.

For the application of regeneration rubber product from waste tire and other waste rubber via thermal regeneration in the downstream rubber products, when conducting statistics as per formula listed in Practical Formula of Rubber Products (Xie Zhonglin Yang Minfang, Chemical Industry Press Published by Material Science and Engineering Publishing Centre, February 2004, Edition 2), the summarized characteristics shall be as follows: in the downstream formula application, at least more than 95% cases concerns repowdering of regeneration rubber by adding new rubber, reinforcing agent, packing and softener, etc compliance with GB. According to the statistics and analysis: the existing regeneration rubber production technology has not fully taken advantage of low energy consumption of powdering of particle or cream syrup material after high temperature treatment and maximize repowdering regeneration rubber product that reduces power consumption; the existing regeneration rubber production technology doesn't include environment-friendly technical scheme that can replace mixture of regeneration rubber, softener and powder material; the industrial chain concerning waste rubber regeneration and recycling has serious repeated processing issue.

For the composite equipment for thermal regeneration of waste tire and other waste rubber, the sealed material feeder is not required in the thermal regeneration process since there is not much flying polluted powder material. The material is manually put into dynamic tank, the material after high temperature treatment is directly exposed in the air. Therefore, the inlet and outlet material has serious pollution.

For a long time, there are two consensuses that hinders technical progress, one: the environmental softener is too expensive to be used in regeneration rubber formula; two: quality standards from home and abroad potentials advocate regeneration rubber product with high rubber hydrocarbon, which have no assessment scheme concerning composite product with low regeneration rubber hydrocarbon.

### Inventions

Purposes: in response to existing technical deficiency, propose a method for thermal regeneration of waste rubber.

"Thermal regeneration" hereinto refers to a new process of modified thermal regeneration in response to defects of existing heat-based regeneration rubber technology (hereinafter referred to as new process A), whose advantages: the addition of environmental high dosage softener or/and powder material applies to efficient qualitative utilization of waste tire and other high-level waste rubber as well as low-level waste rubber; its process takes adequate advantage of pro-powdering rubber particle and syrup to reduce or avoid degradation of rubber hydrocarbon by high temperature air, removal energy consuming rolled refined process and prevent over processing of existing technology.

It can integrate new process A of modified waste rubber regeneration, well-known thermal cracking of waste rubber B and production of common carbon black by fuel oil and fuel gas via thermal cracking C; besides, it can make resource recycling of waste tire and otherwaste rubber through heat-based regeneration rubber process of full quota, greening, high value and energy saving.

Another purpose: propose a special composite device for implementing this invention, whose advantages: suitable for clean and energy-saving production of various compounds by addition of environmental high dosage softener or/and powder material; avoid or curb rapid degradation of rubber hydrocarbon in high temperature material by oxygen.

One more purpose: provide this invention method-based composite product containing regeneration rubber and purpose thereof; for the said composite product, whose advantages: product constituents can cover and replace material aggregate of regeneration rubber, softener, powder material; little dust or no dust arising from product application and greatly reducing rubber refining time and energy consumption.

### Technical scheme

This invention firstly proposes the following technical thoughts focusing on three purposes thereof Regarding the first purpose, produced new process A of waste rubber regeneration through modified waste rubber regeneration:
1. For the modified new process of regeneration A, the thermal regeneration of waste rubber can retain 5∼40-mesh rough powder heating; the downstream mixed products can maintain core features, including low harness and high elongation;
2. The modified new process A of regeneration shall have new features, which shall at least include: cleanly add material into equipment so that the same can be suitable for production of various composites of environmental high dosage softener or/and powder material; the regeneration formula can cover material aggregate consisting of regeneration rubber, softener and powder material to realize environmental transformation as well as effective utilization of low-level waste rubber;
3. The new process A of regeneration shall strive to reduce over regeneration of rubber hydrocarbon chain by coexistence of oxygen and heat; try to increase temperature and add material after heat treatment by making waste rubber in an oxygen-free environment;
4. Fully make use of low shear resistance of waste rubber material in a soft cream or loose cake status after heat treatment, add powder material for rubber;
5. The soft reagent shall be free from polluted material, such as coal tar, pine tar, PAHs, tall oil, etc; set high environment standard;
6. The produced waste gas and water shall not be discharged into environment;
7. Try to use energy reasonably and necessarily and waste energy
8. Integrate modified new process A of waste rubber regeneration, well-known thermal cracking of waste rubber B and production of ordinary carbon black from fuel oil, gas through thermal cracking to make complementary transfer of material and energy among A, B, C and minimize transfer of material and energy between A, B, C and environment.

For the second purpose, it's specific to composite equipment concerning new process A of waste rubber regeneration:
9. Be equipped in the suction of unit or composite equipment for mixing and heating rough waste rubber powder particle, softener, or/and softener and powder material, or in the suction of unit or composite equipment for mixing and cooling thermal mixture of waste rubber and softener; be equipped with composite sealed mechanical system for supplying rough rubber powder particle or/and reagent, powder material;
10. The composite equipment A is equipped with heating equipment;
11. The composite equipment A is equipped with mixing equipment;
12. The composite equipment A is equipped with cooling equipment;
13. The composite equipment A is equipped with refinery equipment;
14. The composite equipment A is equipped with material delivery equipment;
15. The composite equipment A can be equipped with metering equipment;
16. The composite equipment A can be equipped with sealed, sound-proof and gas-eliminating device to establish compliance with environmental protection requirement;
17. The composite equipment A can be equipped with automatic circuit system to improve efficiency.

For the third purpose:
18. The produced composite product containing regeneration rubber, softener, powder material include: at least one product contains carbon black from waste tire and other waste rubber via thermal cracking; for the said composite product, the prepared material has been added with environmental high-dosage softener or/and powder material; the softener for all composite product shall not contain coal tar, pine tar, tall oil, PAHs and other polluted material; for the produced composite product, the used material for waste rubber product shall include but not be limited to mix of one or more than one tire, tire bladder, inner tire, cable rubber, rubber tube, rubber shoe, product scraps.
19. Use the purpose of the said method-based composite product to replace or partially replace material aggregate consisting of regeneration rubber, softener and powder material in the downstream rubber product formula.

A measurement method that is capable of implementing extensive quality assessment on the said product deriving from GB is attached.

Specifically, the technical scheme for this invention thought is like this:

Technical scheme 1, method
(1-a). A method of thermal regeneration of waste rubber, whose characteristics are as follows:

The said "thermal regeneration" process A, include: add 5~40-mesh rough powder particle of waste rubber/environmental softener/powder material with weight ratio ranging among 100/8~150/20~1500 into mixing heater; first carry out oxygen-free heating and then divert into mixing cooler to cool below 100°C; the discharge material is product; or set aside some or all powder material and then slowly add into mixing heater or/and add the same when the hot material has been diverted into mixing cooler; when the mixture has been cooled below 100°C, the discharged material is product; after initial mixing of the prepared material, directly divert the same into screw extruder and heat to 200°C ~300°C and get into mixing section; when the mixture has been cooled below 100□, the discharged material is product;

Or, establish material or/and energy multiple transfer relation among process A, well-known thermal cracking of waste rubber B and production of ordinary carbon black from fuel oil or/and fuel gas through thermal cracking.
(1-b). The said environmental softener in technical plan (1-a), excluding any of odorous and polluted coal tar, pine tar, tall oil and PMHs; the content of PMHs compound in the required softener shall not exceed 3% at most; the limit of variety and content of PMHs shall be compliance with 2005/69/EC and its replacement directive; the most typical varieties shall at least include:

Mix of one or more than variety of environmental rubber filler oil, naphthenic oil, machinery oil, paraffin, white oil, vaseline, third line distillate, sixth line distillate, transformer oil, low molecular, polyolefin wax, dioctyl phthalate, dibutyl phthalate, tricresyl phosphate, DOS, diglycol, C4~18 fatty acid, stearic acid, palmitic acid, oil acid, palm acid, niger, plant oil, or/and mix of one or more than one glycerol, non-odorous pitch, modified rubber powder asphalt, rosin, hydrogenation rosin, dehydrogenated rosin, ester gum, xylene rosin resin, abietate, alkyl phenolic resin, terpene resin, petroleum resin, special octyl phenol resin, coumarone, styrol resin, polyethylene resin, polypropylene resin, glycidyl fat, vinyl acetate copolymer, PBS and miscellaneous waste plastics.

Thereinto, the said environmental rubber filler oil is a top-notch product name; currently, the quality for environmental rubber filler oil is marked as follows: the content of PAHs compound is no more than 3% (wt), the varieties and quantities of PAHs conforms to 2005/69/EC; major contents of this oil, some are mixture of naphthenic oil or/and TDAE, some are introduced by the manufacturer, which is mixture of plant source type made of edible oil or/and Lauraceae, apocynaceae, compositae, orchidaceae, flacourtiaceae, asclepiadaceae and other plants; the existing environmental rubber filler is mainly used to make rubber, which is highly soluble with butylbenzene.

The addition volume of environmental softener shall be 8~150% weight of rough powder of waste rubber; when the addition volume of environmental softener reaches 15~150% weight of rough powder of waste rubber, it shall be regarded as high dosage addition as per this invention.

The softener selection shall match with waste rubber varieties, which shall observe well-known like dissolves like principle.
(1-c). The said powder material as per technical scheme (1-a) shall include mix of at least one more than one the following mentioned powder; it's better if the selected varieties are less; the most typical varieties shall at least include:

Reinforcing agent for rubber, including but not limited to: carbon black, such as: secondary regeneration carbon black from waste tire and other waste rubber, new carbon black made from oil and fuel gas and carbon black made from agricultural plant straw, shell; mix of one ore more than one carbon fiber, white carbon black, super fine calcium carbonate;

Or/and filler for rubber, including but not limited to: mix of one or more than one varieties of powder coal dust, calcium carbonate, fiber, graphite, heavy calcium carbonate, light calcium carbonate, kaoline, acid white soil, bentonite, figuline, attapulgite, stone powder, quartzite, vermiculite, brucite, aluminium hydroxide, dolomite, plaster, calcite, feldspar, Silk stone, montmorillonite, perlite, opal, diatomite, mica, coal powder, slabstone.

Or/and powder material for rubber, including but not limited to: mix of one or more than one varieties of zinc oxide, magnesia, 100-mesh rubber powder and carbon black from rubber via thermal cracking or/and filler mixture powder, powder accelerant.

The addition of powder material is 20~1500% weight of rough powder of waste rubber; when the addition of powder material is 50~1500% weight of rough powder of waste rubber, it shall be high dosage addition as per this invention. For the powder material that is not marked with particle size, it shall be at least thinner or equal to 200 mesh (the thinner, the better).
(1-d). As per technical scheme (1-a), the said "addition", thereinto, the involved "entry mixing heater", "entry mixing cooler", "initial mixing", "entry screw extruder" shall be clean operation, which shall include: divert 5~40-mesh rough powder of waste rubber and environmental softener or its powder into a sealed mixing heater or divert material after heat treatment into another mixing cooler and then add softener and powder material into sealed mixing cooler, all of which shall be closed; it shall be sealed packing feed or sealed mechanic feed (artificial feed with sealed packing instead of sealed mechanic operation, which is only suitable for material without serious pollution); it's best to adopt sealed mechanic operation.
(1-e). The said "oxygen-free heating" as per technical scheme (1-a) means that during heating, one or more than one oxygen elimination measures are adopted:
(1-e-1). Prevent rubber material from contact air with oxygen when heating above 100°C;
(1-e-2). Before heating sealed vessel, vacuum the vessel with material;
(1-e-3). Charge nitrogen into sealed vessel;
(1-e-4). Add water or steam into vessel;
(1-e-5). Add into reagent or cooling water contacting rubber material chemical antioxidant, whose typical varieties shall at least include: mix of one or more than one varieties of oxalic acid, oxalate, hydroquinone, BHT,dialkyl hydroquinone, alkyl paracetamol, 4[β- (3, 5- ditertbutyl 4- hydroxy - phenyl) methylacetic] Dipentaerythritol ester, β (3, 5-) ditertbutyl4- hydroxy - phenyl propionic acid ester 18;

The better oxygen elimination scheme is a combination of the aforesaid oxygen elimination measures.

The typical "heating" operation shall at least include: gauge pressure 0.0~3.0MPa, heating to 160°C~260°C, mix material with temperature at 160°C~260°C, insulation and stay 0.2~3 h; however, when it is heated to 180°C~300°C, the duration for mixing, insulation and stay can shorten to 0.1~0.5 h; when the heating temperature reduces to 140°C~180°C, it's feasible to extend the duration for mixing, insulation and stay to 0.3~4 h; the said "heating" can be intermittent or continuous, which shall be subject to the selected heating unit or composite equipment.
(1-f). The said "or establish material or/and energy multiple transfer relation among process A, well-known thermal cracking of waste rubber B and production of ordinary carbon black from fuel oil or/and fuel gas through thermal cracking" as per technical scheme (1-a), thereinto, the relation established through market channel is also included, the specific characteristics thereof includes mix of one or more than varieties:
(1-f-1). The waste rubber regeneration product from process A contains carbon black or/and filler from waste rubber via thermal cracking of process B or/and scrap nylon or/and scrape steel wire fiber from processing 5-40-mesh rough rubber powder of process A is supplied to process B as raw material, or/and fuel oil or/and fuel gas from process B is supplied to process C as carbon source or fuel; or/and syrup waste rubber regeneration product from process A is supplied to process C to replace waste gooey or/and tall oil as particle adhesive for ordinary carbon black;
(1-f-2). Power or/and heat for process A are from fuel gas or/and oil of process B or power or/and waste energy recovered from flue exhaust of process C.

The thermal regeneration of waste rubber or and thermal cracking or combined production with ordinary carbon black as per technical scheme 1 is a perfect link after modification based on core characteristics of heat-based regeneration ofwaste rubber.
(1-g). The 5-40-mesh rough powder of waste rubber is a previous process; the general principle for selecting sieve, for handling waste rubber only containing large quantity of fiber, such as waste oblique tire, 5~15-mesh sieve can be used, including 10, 12, 13, 14, 15; for handling waste rubber containing large quantity of steel wire and other aggregates, such as zero angle tire, 20-40-mesh sieve can be used, including 20, 24, 26, 28, 30, 34, 36, 38, 40; for handling waste rubber free from harmful impurities, such as scrap containing rubber sole, 5-20-mesh sieve may be used, including 5, 8, 10, 16, 18.
(1-h). The thermal regeneration material addition as per technical scheme 1-a) : the weight ratio of 5-40-mesh rough powder of waste rubber/environmental softener/powder material is within 100/8~150/20~1500, thereinto, the relative better weight ratio of rough powder of waste rubber/environmental softener/powder material, including but not limited to these intervals: 100/8~30/50~150, 100/8~30/150~300, 100/30~50/20~50, 100/30~50/50~300, 100/30~150/20~50, 100/30~50/50~150, 100/30-150/50-1500;

The better weight ratio of rough powder of waste rubber/environmental softener/powder material, including but not limited to these intervals: 100/8/50, 100/30/20, 100/30/50, 100/30/150, 100/30/300, 100/50/20, 100/50/50, 100/50/150, 100/50/300, 100/50/1500, 100/150/20, 100/150/50, 100/150/1500;

The said "better" means that the downstream users can get more composition matters by mixing two or more environmental composition matters at different ratio so that producers can meet various downstream composition requirements by only relatively fewer steady varieties; the said relatively better and better weight ratio lies in constituent differential instead of integer ratio. However, the integer ratio will bring more convenience (without unpacking), in particular, feed operation without sealed mechanic operation.
(1-i). The said waste rubber as per technical scheme (1-a) comes from scraps of waste rubber and new product production; the most representative varieties of said rubber product shall at least include: mix of one or more than varieties of tire, inner tire, bladder, shoe sole, cable rubber and accessories; the said accessories shall at least include: tape, rubber board, pipe, seal articles, rubber gloves, etc.
(1-j). The said environmental softener and powder material can be handled according to varieties and addition definition scope; the reagent in waste rubber formula shall be handled according to well-known technology.
(1-k). The said process A as per technical scheme 1 can also include: apply to effective utilization of various waste rubber products; the said effective utilization includes one or more than one mix as follows:
(1-k-1). For the production of 5~40-mesh rough powder from waste rubber, the scrap nylon fiber, steel wire aggregate or/and rubber content less than 20% or/and low-level waste rubber can be recycled as fuel oil, fuel gas, steel wire and carbon black or/and filler via thermal cracking; the recycled carbon black or/and filler can be used as powder material for rubber or filled into composition product with regeneration rubber as per the previous scheme 1;
(1-k-2). The waste rubber with rubber content less than 20% or/and at low level can be made into 5~40-mesh rough powder, which is then made into composition product with regeneration rubber according to mix and handling mode of technical scheme;
(1-k-3). Use one or more mix of wholly scrap steel zero angle tire, semi-steel zero angle tire, oblique tire, bicycle tire, manpower trailer tire and agricultural vehicle tire;
(1-k-4). Use waste rubber product of special rubber as raw material, such as: waste nitrile rubber, waste EPDM, waste halogenated butyl rubber and chloroprene rubber.

Technical scheme 2, device
(2-a). For the composite device A of said process A as per technical scheme 1, whose characteristics: in the inlet of unit or composite machinery (2-1) for mixing or/and heating waste rubber material or/and in the inlet of mixing cooling or/and cooling unit or composite machinery (2-2) m the sealed feed machinery (2-3), which shall be better to be automatic;

For the composite device A as per technical scheme 2, improvement can be made, with detailed descriptions as follows:
For the sealed pressure pot or tank or trough unit or composite machinery (2-1) for mixing or heating, in the outlet of the said (2-1), the sealed pressure pot or tank or trough unit or composite machinery (2-2) for mixing or heating is equipped; in the outlet of the said (2-2), the rubber unit machinery (2-4) for grinding or/and refinery or/and rolling, or/and unit machinery (2-5) for strong mixing of powder is equipped; besides, the electric heating or fuel furnace device (2-6) to provide heat to unit or composite machinery (2-1), the removable unit or composite machinery (2-2) or/and (2-4) or/and cooling device (2-7) for (2-5) heat is equipped;

The better composite device A can be equipped with one or more than mix as follows:
The outlet of unit or composite equipment (2-1) can be equipped with sealed series filter or grinding screw (2-1-1) [so as to remove hard rough particle after heat treatment, which then is diverted into mixing, cooling or repowdering unit or composite equipment (2-2)];

Device to supply nitrogen (2-8) to unit or composite machinery (2-1) or/and (2-2) or/and composite machinery (2-3) for supplying rough powder or/and reagent, supplementary material;

Absorption unit or composite machinery (2-1) or/and (2-2), waste gas adsorption or/and recycling device (2-9) ;

Available waste energy utilization system (2-10) ;

Automatic control system (11);

### More specifically:

The said "unit or composite machinery (2-1) for mixing or/and heating" as per technical scheme 2, same as the said "mixing heater" as per technical scheme 1, one or more than one mix as follows can be used:

The intermittent sealed dynamic heating desulphrizing vessel for waste rubber regeneration, continuous sealed dynamic heating desulphrizing tube for waste rubber regeneration, intermittent universal sealed chemical heating pot, intermittent sealed heating pot for modified pitch powder, etc;

The said "unit or composite machinery (2-2) for mixing or/and cooling" as per technical scheme 2, same as the said "mixing cooler" as per technical scheme 1, one or more than one mix as follows can be used:
Universal sealed chemical cooling or plus pressure pot, universal powder mixing pressure trough with cooling function, mixing pressure tube with cooling function, rubber and powder mixer for the rubber industry, paste mixer with sealing and cooling function in food industry, paste mixer with sealing and cooling function in feed industry;

For the feed composite machinery (2-3) for supplying rough powder or/and reagent, powder material, one or more than one mix as follows can be used:
Hopper, delivery tube, measuring gauge, fan, automatic sealed distribution machinery in the mixed refinery section, automatic sealed distribution machinery in the feed industry;

For the said rubber unit machinery (2-4) with grinding or/and refinery or/and mixing refinery function, one or more than one mix as follows can be used:
Roller machine and screw extruder for rubber industry (such as: single screw extruder with jacket cooling, double screw extruder with jacket cooling, composite single screw extruder with jacket cooling, composite double screw extruder with jacket cooling, etc);

For the said unit machinery (2-5) for strong mixing of powder material, one or more than one mix as follows can be used:
Tube-type mixer with speed as much as 200~1200 rpm, cone-type mixer with speed as much as 200~1200 rpm, horizontal mixer with speed as much as 200~1200 rpm, etc;

For the said electric heating or fuel furnace (2-6), one or more than one mix as follows can be used:
Fuel steam boiler, fuel heat conducting oil boil, fuel salt bath furnace, infrared electric heating device, microwave electric heating device, electric heating rod, electric heating sheet, etc;

For the said cooling device (2-7), one or more than one mix as follows can be used:
Water pipe, water pump, vent pipe, fan, water sprinkling cooling tower, radiation sheet, directional valve, water tank, etc;

For the said nitrogen source device (2-8), one or more than one mix as follows can be used:
Steel bottled nitrogen, transmission pipeline, etc;

For the said exhaust adsorption or/and recycling device (2-9), one or more than one mix as follows can be used:
Pressure and heat tolerant pipeline, water spray pump, water adsorption trough, heat exchanger, fan, cyclone separator, radiation sheet, etc;

For the said waste heat utilization system (2-10), one or more than one mix as follows can be used:
Cycle pipeline with hot water radiation tube and sheet, pipeline with waste hot water utilization,etc.
(2-b) For the composite device A as per technical scheme 1, the involved thermal screw extruder (2-12) has one or more than one composite device matched:
(2-12-1) Sudden water cooling device at the outlet of thermal screw extruder, whose characteristics include: the top of the sudden water cooling device is equipped with water sparger or/and stream extraction pipe, the bottom of the same is equipped with discharge or/and water lute elbow or the side of the same is equipped with view window sealed with glass;
(2-12-2)In the outlet of thermal screw extruder of sudden water cooling device, the grinding mechanism is equipped, whose characteristics include: the shaft head coaxis with extruder screw is equipped with rotary tool, driven by extruder screw; or the coaxis extension line of the extruder screw is equipped with clockwise or counterclockwise grinding tool, driven by another independent power shaft; or the bottom of the discharge of extruder is equipped with a rotary fine tool, driven by another independent power shaft;
(2-12-3)The bottom of the sudden water cooling device as per (2-12-1) is equipped with cycling cooling lute water pool, which can be mix of one or more than varieties of water pool, pump, cooling tower, pipeline and valve;
(2-12-4)For the cycling cooling lute water pool as per (2-12-3), the rubber drainage mechanism consisting of mix of one or more than one varieties of rolling sieve, rotary conveyor, chain conveyor, scrape-type conveyor, belt-type conveyor;

For the said composite equipment of thermal screw extruder (2-12), thereinto, the thermal screw extruder can be one or more than one mix of the following:
Single screw extruder with wall heating, double screw extruder with wall heating, composite single screw extruder with wall heating, composite double screw extruder with wall heating, etc;

For the composite equipment including thermal screw extruder (2-12) as per technical scheme (2-b), further improvement can be made, with detailed descriptions as follows:
The bottom discharge of sudden water cooling device as per (2-12-1) is equipped with rubber unit machinery (2-4) with grinding or/and refinery or/and mixing refinery, electric heating or fuel furnace (2-6) for providing energy to thermal extrusion unit of composite machinery (2-12), cooling device (2-7) to remove heat in (2-12) as well as adsorption or/and recycling device (2-9) for exhaust of sudden water cooling device (2-12-1).
   (2-c)The said composite device A as per technical scheme 2 can also include pre-treatment device (2-13) for waste tire and other waste rubber products; the said pre-treatment device (2-13) can be market complete composite equipment to grind waste tire and other waste rubber products into 5-40-mesh products.
   (2-d)As per technical scheme 1, the said "multi-directional transfer of material or/and energy among process A, thermal cracking of waste rubber B and production of ordinary carbon black from fuel oil or/and fuel gas via thermal cracking", characteristics of used integration device lie in: mass transfer relation of material or/and energy is established among composite A, B and C for the composite device A as per technical scheme (2-a) or/and (2-b), composite device B for extracting fuel oil, gas carbon black or/and filler from waste rubber via thermal cracking and composite device C for making carbon black from fuel oil, gas via thermal cracking;

For the integration device of mass transfer between A, B, C, the characteristics shall at least include any of the following:
(2-d-1)Among composite device A and B or/and C: supply carbon black or/and filler from B or/and C to A, or/and previous process for supplying B from A-for the preparation of 5-40-mesh rough rubber particle, the obtained products shall at least include fiber, steel wire aggregate by product with rubber particle, or/and supply to C from A syrup-shaped regeneration quality product to replace waste gooey or/and tall oil as particle adhesive for ordinary carbon black, or/and supply from B to C fuel gas or/and thermal cracking oil; the said mechanism includes one or more than one mix of transmission pipeline, delivery belt, and vehicle;
(2-d-2)Among composite device A and B or/and C, there is pipeline for transferring heat from B or/and C to A or/and cable for power transmission.
(2-e)For the said unit machinery, device as per technical scheme (2-a) to (2-d) and unit machinery, composite machinery, device, mechanism and system, the well-known technology and market equipment can be used.

Technical scheme 3, product
(3-a)The obtained composite product with regeneration rubber and application thereof by using any of technical scheme 1~2

For the said composite product, its characteristics include any one or more than one mix of (3-a-1) or (3-a-1) and (3-a-1) (3-a-2), (3-a-3) (3-a-4):
(3-a-1) For the said environmental composite product with regeneration rubber, thereinto: weight ratio of "waste rubber/environmental softener/powder material" is within 100/8~150/20~1500, the relatively better weight ratio of "waste rubber/environmental softener/powder material", includes but is not limited to the intervals as follows:
   100/8~30/50~150, 100/8~30/150~300, 100/30~50/20~50, 100/30~50/50~300, 100/30~50/50~150, 100/30~150/20~50, 100/30~150/50~1500,

The better weight ratio of rough powder/environmental softener/powder material includes but not limited to: 100/8/50, 100/30/20, 100/30/50, 100/30/150, 100/30/300, 100/50/20, 100/50/50, 100/50/150, 100/50/300, 100/50/1500, 100/150/20, 100/150/50, 100/150/1500,

For the said softener, the content of PMHs compound in the required softener shall not exceed 3% at most of the weight of included softener; the variety of PMHs shall be compliance with 2005/69/EC (limit of harmful impurities in the softener compliance with this directive and its replacement directive); the said softener excludes any of polluted coal tar, pine tar, tall oil and PMHs;
(3-a-2). At least one variety shall include secondary regeneration carbon black or/and filler from waste tire and other waste rubber via thermal cracking;
(3-a-3). The used material for waste rubber product shall include but not be limited to mix of one or more than one tire, tire bladder, inner tire, cable rubber, rubber tube, rubber shoe, product scraps
(3-a-4). Raw material for making waste rubber products can also include: one or more than one mix of waste nitrile rubber, waste EPDM, waste halogenated butyl rubber and chloroprene rubber
(3-b). Application of the said composite products, includes but not limited to: exterior tire, inner tire, tire mat, pre-vulcanized tire surface, rubber tube, transmission tape, delivery tape, floor laying products, shoe sole, sleeper;

The said application characteristics include: partially or wholly replace aggregate of one or more than one regeneration rubber, rubber powder, softener, reinforcing agent and filler in downstream formula, reduce powder adsorption and mixing refinery in rubber making process, reduce or eliminate powder dust pollution during mixing refinery operation.

The environmental composite product from thermal regeneration and application thereof can realize environmental transformation of aggregate of regeneration rubber, softener, powder material.
(3-c) The composite device A as per technical scheme 2 and extruder composite equipment with sealed sudden water cooling chamber in the outlet of thermal extruder of composite device A as independent product; the said integrated device that makes mass transfer among composite device A, B, C, is also taken as independent product.

As per technical scheme 1 and 2, for the material addition of thermal regeneration of waste rubber, it is emphasized that the successful case of application of sealed distribution machinery in the feed and food industry and in the rubber making of the original rubber industry is transplanted to the material addition of thermal regeneration of waste rubber.

As per the technical scheme 1, the environmental softener, together with rough rubber powder and large dosage powder material are heated in a oxygen-environment in the heating section of screw extruder or heating vessel, which will not compromise production capacity of heating vessel or screw extruder and increase energy consumption. When the rough rubber powder is piled in the heating vessel, the material has many clearances. After the addition of large dosage softener or powder material, instead of enlarging piling volume, the material's heat conducting capacity has improved. The softing and expansion temperature and heating duration for rough rubber powder greatly reduce, which is the same with screw extruder. Although the total handling volume increases, the softening and expansion becomes easier. Therefore, it is proper to adjust discharge clearance and accelerate passing speed of material.

In the previous scheme 1, for the power material, a technical scheme on mixing with cooling syrup or loose cake-shaped rubber material in the sealed cooling tank is proposed, which shall not only accelerate cooling, but also reduce energy consumption of downstream rolling refinery by using low mixing resistance of the material; meanwhile, it doesn't cool discharged material from high-temperature vessel on the workshop floor as the existing technology, which avoids serious pollution on workshop atmosphere by hot rubber material, rapid burning of hot rubber material by air and provide convenience for waste heat utilization.

In this invention, the cost performance ratio of regeneration quality composite product obviously increases; product quantity and varieties rise; in the downstream application, the replacement volume of material aggregate expands and the downstream polluted powdering and rubber making operation reduce; as per the technical scheme, the weight ratio of waste rubber/environmental softener/powder material is within 100/8~150/20~1500, which can cover almost all aggregate consisting of regeneration rubber, softener and powder material of 8825 formula listed in Practical Formula of Rubber Products (Xie Zhonglin Yang Minfang, Chemical Industry Press Published by Material Science and Engineering Publishing Centre, February 2004, Edition 2). Besides, unlike existing technology, the selected softener excludes coal tar, pine tar, tall oil PAHs as well as varieties with harmful impurities and those that don't conform to environmental requirements; the scheme implementation can be realized by increasing or reducing some function units based on the existing composite equipment for producing regeneration rubber and modified asphalt; the new ideas on waste resources of full quota, greening, high value and energy saving is applied to heat-base regeneration rubber product with bigger elongation, based on which, realize multiple constituents aggregate replacement of product implication and quality utilization of low-level raw material.

In terms of improvement on composite device of thermal regeneration of waste rubber, its novelty and innovation lies in: in the inlet of unit or composite machinery for mixing and heating rough rubber powder particle, environmental softener or environmental softener and powder material or in the inlet of unit or composite machinery for cooling of thermal mixture of waste rubber and softener, the automatic control composite machinery for supplying rough rubber powder particle or/and reagent and material; it is to transplant composite distribution machinery that has been successfully used in distribution and rubber making of rubber industry and mixing of the feed industry in the thermal regeneration composite device of the waste rubber so that the thermal regeneration composite device can get accustomed to huge increase of non-waste rubber content in the formula. Meanwhile, high-dosage powder dust pollution will not occur;

Besides, the said thermal extruder composite device gets over disadvantages of the existing thermal extruder that the smelly thermal steam will prevail the workshop since the rubber material is rapidly oxidized by air.

The composite product with regeneration rubber is not the traditional regeneration rubber, thereinto, the content of rubber hydrocarbon is obviously less than regeneration rubber defined in various specifications and varieties as per *Regeneration Rubber* GB/T 13460-2008; if the GB/T 13460-2008 is continued to be used to make simple judgment, whatever good environmental friendliness and application characteristics, the said composite product will be wrongly judged as "fail"! Standards on regeneration rubber in other countries have similar wrong judgment, that's one of reasons for blockage of new technology by existing product criteria. In this field, for a long period, the technical scheme based on material addition portfolio in technical scheme 1 has not been proposed; in order to resolve such product judgment dilemma, the inventor has proposed "extensive judgment method" based on the usual international criteria concerning existing industry.

The judgment mechanism for the so-called "extensive judgment method": under the same comparison background, separately measure baseline rubber aggregate 1 with known quality level and rubber aggregate 2 to judge with unknown quality level. When two groups of rubber materials have equal or similar property value, it's judged that aggregate 2 and aggregate 1 has same or similar quality level.

The specific measuring can be:
a, Based on *Regeneration Rubber* GB/T 13460-2008, classify traditional regeneration rubber into superior level, level I, level II and pass, which shall be used as baseline rubber material;
b, Prepare baseline rubber material as per weight ratio and varieties of waste rubber/softener/powder material into 1 to 4 baseline constituent aggregate;
c, Obtain equal weight of baseline constituent aggregate and compound with regeneration rubber, carry out conventional handling and measure property data of various rubber materials;
d, Specifically compare inspected rubber sample with baseline rubber material at superior level, level I, level II and pass and confirm level of inspected rubber sample;
e, Referring to baseline rubber material at same level with inspected rubber sample and through estimation of trading parties as per market price, get unit weight value of composite product with regeneration rubber;
f, In the actual quality inspection, measure one part of inspected sample with detection formula and get rubber sample level by comparing measuring property data with preset leveling data.

During practice, the inventor finds out that the hydrocarbon chain quality level of regeneration rubber will not degrade even diluted in the rubber material.

The said process A as per technical scheme 1 has two necessary prerequisite, one, weight ratio of 5-40-mesh rough powder of waste rubber/environmental softener/powder material is within 100/8~150/20~1500, two: oxygen-free heating. This necessary composite scheme can't be simply drawn from combination of open technology without creative effort. For a long time, in this field, there are two misled "consensuses" that hinder technical progress, one, to use expensive environmental softener in the regeneration rubber formula is not accepted by the market; two: quality criteria on regeneration rubber from home and abroad don't go for regeneration rubber product with low rubber hydrocarbon content. Therefore, "environmental softener/powder material" will not be added in a large value. It seems as if such action will increase cost, reduce rubber hydrocarbon content and cost performance ratio. However, the technical scheme as per this invention attaches importance to covering all regeneration rubber, softener and powder material aggregate and environmental transformation in the downstream user formula (improve product quality and quantity); the technical scheme avoids over processing in the existing industrial chain labor division (that is, the regeneration rubber company takes lots of effort to make rubber material with high rubber hydrocarbon content and get high-performance regeneration rubber product; the downstream users takes much effort to mix rubber material with softener and powder material and dilute the regeneration rubber hydrocarbon into rubber material of new rubber product), save large quantity of energy and processing cost of downstream users (that is to reduce upstream and downstream production cost) and provide a regeneration rubber GB-based extensive judgment & testing scheme (with judgment means); the downstream users can get quality material when applying regeneration quality rubber, which can greatly save expenses concerning environmental protection and energy consumption; after a comprehensive measuring, both upstream and downstream enterprise has improved quality and reduced cost; therefore, the technical proposal to use high-dosage "environmental softener/powder material" is established.

### Attached Figure Descriptions

Figure 1 One Schematic Block Diagram of Composite Device A for the Said New Process A of Thermal Regeneration for Waste Tire and Other Waste Rubber.

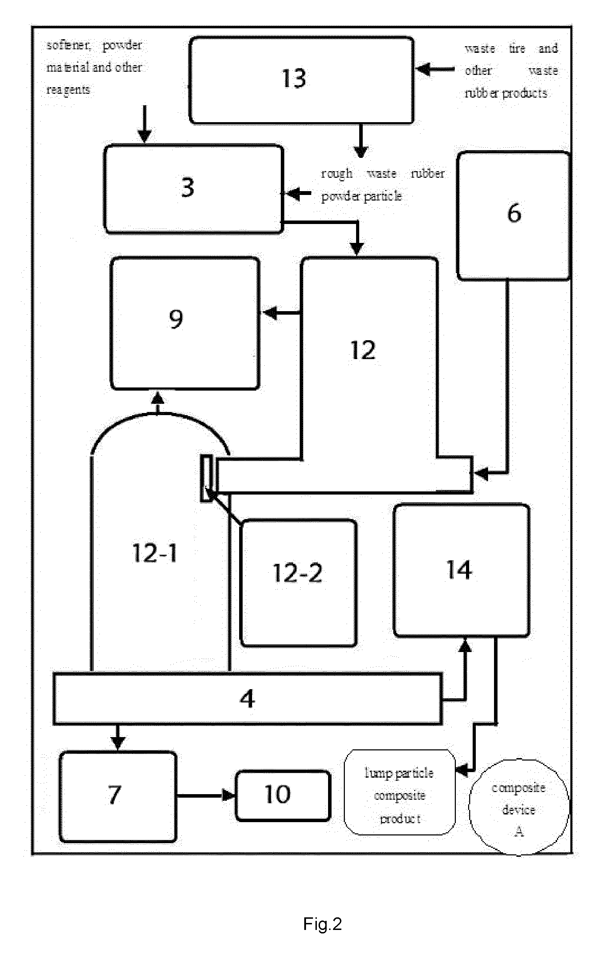

Figure 2 Another Schematic Block Diagram of Composite Device A for the Said New Process A of Thermal Regeneration for Waste Tire and Other Waste Rubber.
Figure 3 Schematic Drawing of Extruder Composite Equipment contained in the Said Composite Device A.
Figure 4 Schematic Drawing of the Said Thermal Regeneration and Thermal Cracking of Waste Rubber and Composite Device for Combined Production with Ordinary Carbon Black.

### Specific implementation mode

In the following, the specific implementation mode of the proposed technical scheme is further described through implementation cases. However, for the implementation cases in these specific implementation modes, varieties and addition proportion of involved waste rubber, softener, powder materials, etc are only representatives, which shall not be deemed as limit on protection scope of this invention.

### Implementation case 1

(1-1) Preparations: obtain 20-40-mesh rough powder on waste tire top with fiber and steel wire removed, 100 unit (hereinafter referred to as "unit"), adopt sealed operation and divert material one by one into a sealed mixing heating vessel; firstly add some softener, whose composition: softener 150 unit, specifically include: environmental rubber filler oil 15 unit, No. 30 machinery oil 67 unit, paraffin 10 unit, stearic acid 28 unit; antioxidant 3 unit, varieties: 2, 6-BHT; water 13 unit. For the said softener, first thermal mixing and then add by pump measuring. The addition order of rough powder and reagent can be reversed. It's better to add water first, which can prevent material burning by hot vessel. The weight ratio of rough powder and environmental softener is 100/150. After addition, close addition door, open suction and discharge valve; replace air in the vessel by charging and discharging steel bottled nitrogen for approximately 5 mins. Heat to 240□ and stop heating when the vessel pressure at 2.0MPa and insulate for 20~40. Open drain valve of mixing heating vessel. Recycle the waste heat and make it pass through waste removal composite device to realize target-compliance discharge (the drain process can't be too fast since the syrup-shaped material and water in it can form foam after reduced pressure. When the foam is taken out of the heating vessel by gas, it can cause blockage in the pipeline after cooling); close drain valve and reserve some pressure for the mixing heating vessel to facilitate material discharge. The syrup-shaped material after insulation treatment is diverted into another sealed mixing tank with cooling medium jacket; before it is put into cooling mixing vessel, firstly add powder material in the sealed cooling mixing vessel; during putting in material, mixing while cooling with water; when the syrup-shaped material is put into cooling mixing vessel, close the entry door. The weight ratio of rough powder and powder material is 100/558, specifically: N220, carbon black 300 unit, N330 carbon black 200 unit, carbon black from scrap nylon fiber of tire side and waste tire 58 unit. Mix loose cake-shaped material and drain it before lump forms. The mixing operation time shall generally be 10~20 m without compromising production capacity of heating operation. The discharged material can be put into packing box and bag; the optimal temperature for discharging material can be controlled at 30~40□. The loose cake-shaped product is composite product with regeneration production and high-dosage softener and powder material; the downstream rubber product formula can cover one or more than one aggregate of regeneration rubber, softener and powder material.

For the material addition covered in the aforesaid operation, the sealed mechanical operation is used. It's better the said mechanic operation is equipped with automatic control circuit.

This implementation case adopts new regeneration process A and well-known thermal cracking B to handle scrap nylon fiber; the produced carbon black from process B is mixed into regeneration rubber product; the used heating source or/and power is sourced from process B or/and waste fuel gas and flue gas from process C of making N220, N300 carbon black; besides, the produced syrup-shaped regeneration quality production of waste rubber (without mixing powder material) can be used in process C to replace waste gooey or/and tall oil as particle adhesive for ordinary carbon black.

### (1-2) Detection comparison:

| Formula | | Base rubber material | Composite product of measured Implementation case 1 |
|---|---|---|---|
| Two comparison rubber with same constituent and equal weight | Natural rubber (No. 3 smoke sheet) | 70 | 70 |
| | BR | 30 | 30 |
| | Zinc oxide | 4 | 4 |
| | Anti-ager RD | 1 | 1 |
| | Anti-ager 4010 | 1 | 1 |
| | Accelerant DM | 0.3 | 0.3 |
| | Accelerant NOBS | 0.5 | 0.5 |
| | Sulfur | 1.4 | 1.4 |
| Baseline Constituent aggregate | In compliance with Superior Level regeneration rubber as per r Regeneration Rubber GB/T 13460-2008 | 10 | / |
| | Stearic acid | 2.5 | / |
| | Paraffin | 1 | / |
| | No. 30machinery oil | 11 | / |
| | N220 Carbon black | 30 | / |
| | N330 Carbon black | 20 | / |
| Measured material | Composite of measured Implementation case 1 | / | 74.5 |
| Total (unit) | | 182.7 | 182.7 |
| Vulcanized condition | 143 °C x30min | | |
| | Hardness (Shore A) deg | 58 | 59 |
| Detection data | MPa Tensile strength | 21.6 | 22.2 |
| | 300% stress MPa | 9.7 | 9.5 |
| | Elongation at break% | 584 | 590 |
| | Permanent deformation at break% | 15 | 15 |
| | Akron abrasion cm3 | 0.08 | 0.08 |
| | Tensile strength at break kN/m | 115 | 120 |
| Evaluation | | Heavy powder dust Time-consuming | No powder during rubber making, time-saving |

(1-3). Purpose: the composite product with regeneration rubber from this implementation case can be used as material for tire surface.

### Implementation case 2

(2-1) Preparations: obtain 20-40-mesh rough powder on waste tire top with fiber and steel wire removed, 100 unit, adopt sealed operation and divert material one by one into a sealed mixing heating vessel; firstly add some softener, whose composition: softener 32 unit, specifically include: environmental rubber filler oil 10 unit, No. 40 machinery oil 16 unit, paraffin 4 unit, stearic acid 2 unit; antioxidant 3 unit, varieties: 2, 6-BHT; water 13 unit. \The addition order of rough powder and reagent can be reversed. The weight ratio of rough powder and environmental softener is 100/32. After addition, close addition door, open suction and discharge valve; replace air in the vessel by charging and discharging steel bottled nitrogen for approximately 5 mins. Heat to 260□ and stop heating when the vessel pressure at 3.0MPa and insulate for 30. Open drain valve of mixing heating vessel. Recycle the waste heat and make it pass through waste removal composite device to realize target-compliance discharge; close drain valve and reserve some pressure for the mixing heating vessel to facilitate material discharge. The syrup-shaped material after insulation treatment is diverted into another sealed mixing tank with cooling medium jacket; before it is put into cooling mixing vessel, firstly add powder material in the sealed cooling mixing vessel; during putting in material, mixing while cooling with water; when the syrup-shaped material is put into cooling mixing vessel, close the entry door. The weight ratio of rough powder and powder material is 100/65, specifically: N550, carbon black 40 unit, carbon black from scrap nylon fiber of tire side and waste tire 25 unit. Mix loose cake-shaped material and drain it before lump forms. the said composite product with regeneration rubber is produced. The loose cake-shaped material can be diverted into roll machinery with jacket cooling medium; when the discharged material is cooled below 40°C with air or cooling water, which can be directly used or packed after normalization treatment. The produced product is composite product with regeneration rubber and high-dosage environmental softener and powder material.

This implementation case adopts new regeneration process A and well-known thermal cracking B to handle scrap nylon fiber; the produced carbon black from process B is mixed into regeneration rubber product; the used heating source or/and power is sourced from process B or/and waste fuel gas and flue gas from process C of making N550 carbon black.

### (2-2) Detection comparison:

| Formula | | Base rubber material | Composite product of measured Implementation case 2 |
|---|---|---|---|
| Two companson rubber with same constituent and equal weight | SBR (1502) | 75 | 75 |
| | Zinc oxide | 3 | 3 |
| | Anti-ager 401 ONA | 1 | 1 |
| | Anti-agerBLE | 1 | 1 |
| | AccelerantCZ | 1.2 | 1.2 |
| | Sulfur | 2 | 2 |
| Baseline constituent aggregate | In compliance with Level I regeneration rubber as per r Regeneration Rubber GB/T 13460-2008 | 50 | / |
| | Stearic acid | 1 | / |
| | Paraffin | 2 | / |
| | No. 40 machinery oil | 8 | / |
| | N550 Carbon black | 30 | / |
| Measured material | Composite of measured Implementation case 2 | / | 83.2 |
| Total (unit) | | 174.2 | 174.2 |
| Vulcanized condition | 138°C x45min | | |
| Detection data | Hardness (Shore A) deg | 55 | 55 |
| | Tensile strength MPa | 10.41 | 11.0 |
| | 300% stress MPa | 5.79 | 5.60 |
| | Elongation at break % | 485 | 490 |
| Rubber making process | | Heavy powder dust Time-consuming | No powder during rubber making, time-saving |

(2-3). Purpose: the composite product with regeneration rubber from this implementation case can be used as material for tire side.

### Implementation case 3

(3-1) Preparations: obtain 5-mesh rough powder of butyl tire 100 unit; firstly add some environmental softener, whose composition: softener 55.5 unit, specifically include: environmental rubber filler oil 26 unit, paraffin 10 unit, microcrystalline wax 6.5, stearic acid 13 unit; water 13 unit. The addition order of rough powder and reagent can be reversed. The weight ratio of rough powder and environmental softener is 100/55.5. After addition, close addition door, open suction and discharge valve; replace air in the vessel by charging and discharging steel bottled nitrogen for approximately 5 mins. Heat to 240°C and stop heating when the vessel pressure at 2.0MPa and insulate for 1 h. Divert the material after insulation treatment into another sealed mixing vessel with cooling medium jacket; Open drain valve of mixing heating vessel. Recycle the waste heat and make it pass through waste removal composite device to realize target-compliance discharge; close drain valve and reserve some pressure for the mixing heating vessel to facilitate material discharge. The syrup-shaped material after insulation treatment is diverted into another sealed mixing tank with cooling medium jacket; before it is put into cooling mixing vessel, firstly add powder material in the sealed cooling mixing vessel; during putting in material, mixing while cooling with water; when the syrup-shaped material is put into cooling mixing vessel, close the entry door. The weight ratio of rough powder and powder material is 100/365, specifically: N375, carbon black 356 unit. Mix loose cake-shaped material and drain it before lump forms. The said composite product with regeneration rubber is produced. The loose cake-shaped material can be diverted into roll machinery with jacket cooling medium; when the discharged material is cooled below 40°C with air or cooling water, which can be directly used or packed after normalization treatment. The produced product is composite product with butyl regeneration rubber and high-dosage environmental softener and powder material.

### (3-2) Detection comparison:

| Formula | | Baseline rubber material | Composite product of measured Implementation case 3 |
|---|---|---|---|
| Two companson rubber with sa me constituent and equal weight | Natural rubber (No.3 smoke sheet) | 50 | 50 |
| | BR | 45 | 45 |
| | Zinc oxide | 4 | 4 |
| | Anti-ager4020 | 3 | 3 |
| | Accelerant NOBS | 0.6 | 0.6 |
| | Accelerant DM | 0.3 | 0.3 |
| | Sulfur | 1.2 | 1.2 |
| Baseline constituent aggregate | Inspect butyl regeneration rubber According to Regeneration Rubber GB/T 13460-2008, Tensile strength 9.1 MPa | 17 | / |
| | Stearic acid | 2 | / |
| | Microcrystalline wax | 1 | / |
| | PAHs | 4 | / |
| | N375 Carbon black | 55 | / |
| Measured material | Composite of measured Implementation case 3 | / | 79 |
| Total (unit) | | 184.8 | 184.8 |
| Vulcanized condition | 148°C x25min | | |
| Detection data | Hardness (Shore A) deg | 57 | 57 |
| | Tensile strength MPa | 17.9 | 18.1 |
| | Elongation at break% | 556 | 560 |
| | Resilience% | 36 | 38 |
| | Breaking strengthkN/m | 75.1 | 80.0 |
| Rubber making process | | Heavy powder dust Time-consuming | No powder during rubber making, time-saving |

(3-3). Purpose: the composite product with regeneration rubber from this implementation case can be used as material for tire side or inner tire.

### Implementation case 4

(4-1) Preparations: obtain 20-mesh rough powder, 100 unit, and divert material into a sealed mixing heating vessel; put in environmental softener and powder material, whose composition: softener 38.7 unit, specifically include: environmental rubber filler oil 20 unit, paraffin 1.2 unit, coumarone 12.5, No. 30 machinery oil 2.5 unit; reinforcing agent for rubber and filler powder material 120 unit, specifically include: N330 carbon black 25, N660 carbon black 40, light calcium carbonate 50 unit, zinc oxide 5 unit; antioxidant 5unit, use oxalic acid; water 13 unit. The addition order of rough powder and reagent can be reversed. The weight ratio of rough powder and environmental softener is 100/38.7. The weight ratio of rough powder and powder material is 100/120. After addition, close addition door. Heat to 240°C and stop heating when the vessel pressure at 3.0MPa and insulate for 40 min. The syrup-shaped material after insulation treatment is diverted into another sealed mixing tank with cooling medium jacket; when the discharged material is cooled to ~80°C, the said composite product with regeneration rubber is produced; The cooled material can be diverted into roll machinery with jacket cooling medium; when the discharged material is cooled below 40°C with air or cooling water, which can be directly used or packed after normalization treatment. The produced product is composite product with regeneration rubber and high-dosage environmental softener and powder material.

### (4-2) Detection comparison:

| Formula | | Base rubber material | Composite product of measured Implementation case 4 |
|---|---|---|---|
| Two companson rubber with same constituent and equal weight | Natural rubber (No.3 smoke sheet) | 50 | 50 |
| | SBR1500 | 35 | 35 |
| | Oil filled SBR1712 | 15 | 15 |
| | Anti-agerA | 1.4 | 1.4 |
| | Anti-agerRD | 1.4 | 1.4 |
| | AccelerantM | 0.25 | 0.25 |
| | AccelerantDM | 1.4 | 1.4 |
| | AccelerantCZ | 0.7 | 0.7 |
| | Sulfur | 3.1 | 3.1 |
| Baseline constituent aggregate | In compliance with Level I regeneration rubber as per r Regeneration Rubber GB/T 13460-2008 | 110 | / |
| | Zinc oxide | 5 | |
| | Stearic acid | 2.5 | / |
| | Paraffin | 1.2 | / |
| | No. 30 machinery oil | 2.5 | / |
| | Pine tar | 10 | |
| | Coumarone | 12.5 | |
| | N330 Carbon black | 25 | / |
| | N660Carbon black | 40 | / |
| | light calcium carbonate | 50 | |
| Measured material | Composite of measured Implementation case 4 | / | 253.7 |
| Total (unit) | | 366.95 | 366.95 |
| Vulcanized condition | 143°C x40min | | |
| | Hardness (Shore A) deg | 56 | 56 |
| Detection data | Tensile strengthMPa | 10.9 | 11.0 |
| | 300% stress MPa | 5.1 | 5.2 |
| | Elongation at break % | 540 | 538 |
| | Permanent deformation at break % | 22 | 22 |
| | 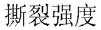 kN/m Break strength | 60 | 61 |
| Rubber making process | | Heavy powder dust Time-consuming | No powder during rubber making, time-saving |

(4-3). Purpose: the composite product with regeneration rubber from this implementation case can be used as material for squeegee of tire side.

### Implementation case 5

(5-1) Preparations: obtain 5-mesh rough powder, 100 unit, and divert material into a sealed mixing heating vessel; put in environmental softener and powder material, whose composition: softener 24 unit, specifically include: paraffin 19 unit, stearic acid 5 unit; powder material 65 unit, specifically include: N550 carbon black 45, N660 carbon black 20; water 13 unit. The addition order of rough powder and reagent can be reversed. The weight ratio of rough powder and environmental softener is 100/65. After addition, close addition door, open suction and discharge valve; replace air in the vessel by charging and discharging steel bottled nitrogen for approximately 5 mins. Close suction and discharge valve. Heat to 240 and stop heating when the vessel pressure at 2.0MPa and insulate for 1 h. Divert material after insulation treatment into another sealed mixing vessel with cooling medium jacket. Open drain valve of mixing heating vessel. Recycle the waste heat and make it pass through waste removal composite device to realize target-compliance discharge; close drain valve and reserve some pressure for the mixing heating vessel to facilitate material discharge. The syrup-shaped material after insulation treatment is diverted into another sealed mixing tank with cooling medium jacket; during putting in material, mixing while cooling with water; when the syrup-shaped material is put into cooling mixing vessel, close the entry door. Mix loose cake-shaped material and drain it before lump forms. The said composite product with regeneration rubber is produced. The loose cake-shaped material can be diverted into roll machinery with jacket cooling medium; when the discharged material is cooled below 40°C with air or cooling water, which can be directly used or packed after normalization treatment. The produced product is composite product with butyl regeneration rubber and high-dosage environmental softener and powder material.

### (5-2) Detection comparison:

| Formula | | Baseline rubber material | Composite product of measured Implementation case 5 |
|---|---|---|---|
| Two comparison rubber with same constituent and equal weight | butyl rubber301 | 90 | 90 |
| | Zinc oxide | 5 | 5 |
| | AccelerantTMTD | 1 | 1 |
| | AccelerantDM | 0.5 | 0.5 |
| | Sulfur | 1.25 | 1.25 |
| Baseline constituent aggregate | Inspect butyl regeneration rubber According to Regeneration Rubber GB/T 13460-2008, Tensile strength 9.0MPa | 20 | / |
| | Stearic acid | 1 | / |
| | Paraffin oil | 17 | / |
| | N550 Carbon black | 45 | / |
| | N660 Carbon black | 20 | / |
| Measured material | Composite of measured Implementation case 3 | / | 103 |
| Total (unit) | | 200.75 | 200.75 |
| Vulcanized condition | | 170°C × 10min | |
| Detection data | Hardness (Shore A) deg | 48 | 48 |
| | Tensile strengthMPa | 10.0 | 10.2 |
| | Elongation at break% | 690 | 685 |
| | 300% stress | 3.3 | 3.5 |
| | Break strength kN/m | 43 | 44 |
| Rubber making process | | Heavy powder dust Time-consuming | No powder during rubber making, time-saving |

(5-3), Purpose: the composite product with regeneration rubber from this implementation case can be used as material for inner tire.

### Implementation case 6

(6-1) Preparations: obtain 20-30-mesh rough powder of waste oblique tire, 100 unit, and divert material into a sealed mixing heating vessel; put in environmental softener and powder material, whose composition: softener 61 unit, specifically include: rubber seed oil 26 unit, paraffin oil 6 unit, naphthene oil 25, stearic acid 1.5 unit, rosin 2.5 unit; antioxidant 5 unit, the varieties can be oxalic acid or/and BHT ; water 15 unit. The addition order of rough powder and reagent can be reversed. Close entry door. Heat to 220°C ~240°C and stop heating when the vessel pressure at 1.5~2.0MPa and insulate for 20 m-3 h. The material after insulation treatment is diverted into another mixing vessel with cooling medium jacket. It's best that the mixing vessel is oxygen free. Add reinforcing agent and filler powder material into the sealed vessel. The said powder material 85 unit, specifically include: N330 carbon black 10 unit, N660 carbon black 25 unit, the content of scrap nylon fiber and rubber content less than 20% and thermal cracking slug in the rubber material 25 unit, figuline 25 unit. When the said powder material and loose cake-shaped rubber material is mixed even and cooled down to 80°C, the said composite product with regeneration rubber is produced. The loose cake-shaped material can be diverted into roll machinery with jacket cooling medium; when the discharged material is cooled below 40°C with air or cooling water, which can be directly used or packed after normalization treatment. The produced product is composite product with regeneration rubber and high-dosage environmental softener and powder material.

### (6-2) Detection comparison:

| Formula | | Baseline rubber material | Composite product of measured Implementation case 6 |
|---|---|---|---|
| Two comparison rubber with same constituent and equal weight | Natural rubber (No. 3 smoke sheet) | 100 | 100 |
| | Zinc oxide | 5 | 5 |
| | Anti-agerA | 1 | 1 |
| | Anti-agerRD | 1 | 1 |
| | Accelerant CZ | 1.2 | 1.2 |
| | Accelerant TMTD | 0.02 | 0.02 |
| | Sulfur | 5 | 5 |
| Baseline constituent aggregate | GB/T 13460-2008 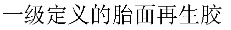 | 250 | / |
| | Stearic acid | 3 | / |
| | Paraffin | 3 | / |
| | No. 30 machinery oil | 13 | / |
| | N330 Carbon black | 20 | / |
| | N660 Carbon black | 50 | / |
| | Figuline | 50 | / |
| Measured material | Composite of measured Implementation case 6 | / | 389 |
| Total (unit) | | 502.22 | 502.22 |
| Vulcanized condition | 170°C × 10min | | |
| Detection data | Hardness (Shore A) deg | 58 | 58 |
| | Tensile strengthMPa | 8.92 | 8.88 |
| | 300% stressMPa | 3.82 | 3.90 |
| | Elongation at break % | 570 | 570 |
| | Break strengthkN/m | 35.3 | 36.0 |
| Rubber making process | | Heavy powder dust Time-consuming | No powder during rubber making, time-saving |

(6-3). Purpose: the composite product with regeneration rubber from this implementation case can be used as material for tire mat.

### Implementation case 7

(7-1) Preparations: obtain 20-mesh rough powder of waste rubber shoe, 100 unit, and divert material into a sealed mixing heating vessel; put in environmental softener and powder material, whose composition: softener 29.25 unit, specifically include: environmental rubber filler oil 8 unit, naphthene oil 7.5 unit, paraffin oil 6.25 unit, , stearic acid 5 unit, rosin 5 unit; antioxidant 5 unit, the varieties can be oxalic acid or/and BHT ; water 15 unit. The addition order of rough powder and reagent can be reversed. Close entry door. Heat to 220°C and stop heating when the vessel pressure at 1.8MPa and insulate for 20 m-30 m. The material after insulation treatment is diverted into another mixing vessel with cooling medium jacket. It's best that the mixing vessel is oxygen free. Add reinforcing agent and filler powder material into the sealed vessel. The said powder material 232.75 unit, specifically include: N330 carbon black 62.5 unit, N774 carbon black 37.5 unit, 60-mesh rubber powder of scrap rubber shoe 75 unit, figuline 25 unit, light calcium carbonate 32.75. When the said powder material and loose cake-shaped rubber material is mixed even and cooled down to ~80°C, the said composite product with regeneration rubber is produced. The loose cake-shaped material can be diverted into roll machinery with jacket cooling medium; when the discharged material is cooled below 40°C with air or cooling water, which can be directly used or packed after normalization treatment. The produced product is composite product with regeneration rubber and high-dosage environmental softener and powder material.

### (7-2) Detection comparison:

| Formula | | Baseline rubber material | Composite product of measured Implementation case 7 |
|---|---|---|---|
| Two comparison rubber with same constituent and equal weight | Natural rubber | 100 | 100 |
| | Zinc oxide | 5 | 5 |
| | Anti-agerD | 1 | 1 |
| | AccelerantD | 0.5 | 0.5 |
| | AccelerantM | 1 | 1 |
| | AccelerantTMTD | 0.1 | 0.1 |
| | Sulfur | 2.8 | 2.8 |
| Baseline constituent aggregate | Regeneration rubber Powder is detected at 4.5MPa According to *Regeneration Rubber* GB/T 13460-2008 | 40 | / |
| | 60-mesh rubber powder of scrap Rubber shoe | 30 | |
| | Stearic acid | 2 | / |
| | Parrafin | 1 | / |
| | Pine tar | 3 | / |
| | N330 carbon black | 25 | / |
| | N774 carbon black | 15 | / |
| | Figuline | 10 | / |
| | Light calcium carbonate | 13.1 | |
| Measured material | Composite of measured Implementation case 7 | / | 139.1 |
| Total (unit) | | 252 | 252 |
| Vulcanized condition | 158°C x4min | | |
| Detection data | Hardness (Shore A) deg | 60 | 60 |
| | Tensile strengthMPa | 20.85 | 20.60 |
| | Elongation at break % | 530 | 535 |
| Rubber making process | | Heavy powder dust Time-consuming | No powder during rubber making, time-saving |

(7-3). Purpose: the composite product with regeneration rubber from this implementation case can be used as surface material for exterior tire of bicycle.

### Implementation case 8

(8-1) Preparations: obtain 20-30-mesh rough powder on waste tire with fiber and steel wire removed, 21.25 unit, and divert material into a sealed mixing heating vessel; put in environmental softener and powder material, whose composition: softener 10.5 unit, specifically include: naphthene oil 4.5 unit, coumarone 1 unit, paraffin 1 unit, stearic acid 4 unit; antioxidant 1 unit, with varieties, 2, 6-BHT; water 2.8 unit. The addition order of rough powder and reagent can be reversed. The weight ratio of rough powder and environmental softener is 100/49.41. After addition, close addition door, open suction and discharge valve; replace air in the vessel by charging and discharging steel bottled nitrogen for approximately 5 mins. Heat to 240°C and stop heating when the vessel pressure at 2.0MPa and insulate for 30 m. Open drain valve of mixing heating vessel. Recycle the waste heat and make it pass through waste removal composite device to realize target-compliance discharge; close drain valve and reserve some pressure for the mixing heating vessel to facilitate material discharge.The syrup-shaped material after insulation treatment is diverted into another sealed mixing tank with cooling medium jacket; before it is put into cooling mixing vessel, firstly add powder material in the sealed cooling mixing vessel; during putting in material, mixing while cooling with water; when the syrup-shaped material is put into cooling mixing vessel, close the entry door. The weight ratio of rough powder and powder material is 100/235.29, specifically: N220, carbon black 15 unit, N330, carbon black 35 unit. Mix loose cake-shaped material and drain it before lump forms. The said composite product with regeneration rubber is produced. The loose cake-shaped material can be diverted into roll machinery with jacket cooling medium; when the discharged material is cooled below 40°C with air or cooling water, which can be directly used or packed after normalization treatment. The produced product is composite product with regeneration rubber and high-dosage environmental softener and powder material.

### (8-2) Detection comparison:

| Formula | | Baseline rubber material | Composite product of measured Implementation case 8 |
|---|---|---|---|
| Two comparison rubber with same constituent and equal weight | Natural rubber | 100 | 100 |
| | Zinc oxide | 5 | 5 |
| | Anti-ager A | 1 | 1 |
| | Anti-ager D | 1 | 1 |
| | AccelerantCZ | 0.3 | 0.3 |
| | AccelerantDM | 0.5 | 0.5 |
| | Sulfur | 2.5 | 2.5 |
| Baseline constituent aggregate | In compliance with Level I regeneration rubber as per r Regeneration Rubber GB/T 13460-2008 | 25 | / |
| | Stearic acid | 4 | / |
| | Paraffin | 1 | / |
| | Pine tar | 2 | / |
| | Asphalt | 1 | / |
| | N330 Carbon black | 35 | / |
| | N220 Carbon black | 15 | / |
| Measured material | Composite of measured Implementation case 8 | / | 83 |
| Total (unit) | | 193.3 | 193.3 |
| Vulcanized | 145°C × 30min | | |
| condition | | | |
| Detection data | Hardness (Shore A) deg | 63 | 63 |
| | Tensile strengthMPa | 26.2 | 26.5 |
| | 300%stressMPa | 8.6 | 8.7 |
| | Elongation at break% | 580 | 582 |
| Rubber making process | | Heavy powder dust Time-consuming | No powder during rubber making, time-saving |

(8-3). Purpose: the composite product with regeneration rubber from this implementation case can be used as material for pre-vulcanized surface rubber of tire.

### Implementation case 9

(9-1) Preparations: obtain 20-30-mesh rough powder on waste tire with fiber and steel wire removed, 9 unit, and divert material into a sealed mixing heating vessel; put in environmental softener and powder material, whose composition: softener 7 unit, specifically include: naphthene oil 4.5 unit, coumarone 0.5 unit, paraffin 1 unit, stearic acid 1 unit; antioxidant 1 unit, with varieties, 2, 6-BHT; water 1.2 unit. The addition order of rough powder and reagent can be reversed. The weight ratio of rough powder and environmental softener is 100/77.78. After addition, close addition door, open suction and discharge valve; replace air in the vessel by charging and discharging steel bottled nitrogen for approximately 5 mins. Heat to 240□ and stop heating when the vessel pressure at 2.0MPa and insulate for 30 m. Open drain valve of mixing heating vessel. Recycle the waste heat and make it pass through waste removal composite device to realize target-compliance discharge; close drain valve and reserve some pressure for the mixing heating vessel to facilitate material discharge. The syrup-shaped material after insulation treatment is diverted into another sealed mixing tank with cooling medium jacket; before it is put into cooling mixing vessel, firstly add powder material in the sealed cooling mixing vessel; during putting in material, mixing while cooling with water; when the syrup-shaped material is put into cooling mixing vessel, close the entry door. The weight ratio of rough powder and powder material is 100/500, specifically: N774, carbon black 25 unit, N330, carbon black 20 unit. when the discharged material is cooled below 40°C,the said composite product with regeneration rubber is produced. The loose cake-shaped material can be diverted into high speed mixing machinery with jacket cooling medium; the parcel-like rubber material is input into material warehouse for central packing. The produced product is parcel-like composite product with regeneration rubber and high-dosage environmental softener and powder material.

### (9-2) Detection comparison:

| Formula | | Base rubber material | Composite product of measured Implementation case 9 |
|---|---|---|---|
| Two comparison rubber with same constituent and equal weight | Natural rubber | 100 | 100 |
| | Zinc oxide | 5 | 5 |
| | Anti-agerA | 1.5 | 1.5 |
| | AccelerantDM | 0.15 | 0.15 |
| | AccelerantM | 1.1 | 1.1 |
| | AccelerantTMTD | 0.1 | 0.1 |
| | Sulfur | 2.3 | 2.3 |
| Baseline constituent aggregate | In compliance with Level I regeneration rubber as per r Regeneration Rubber GB/T 13460-2008 | 10 | / |
| | Stearic acid | 1 | / |
| | Paraffin | 1 | / |
| | Pine tar | 4 | / |
| | N330 Carbon black | 20 | / |
| | N774 Carbon black | 25 | / |
| Measured material | Composite of measured Implementation case 9 | / | 61 |
| Total (unit) | | 171.15 | 171.15 |
| Vulcanized condition | 143°C × 18min | | |
| Detection data | Hardness (Shore A) deg | 68 | 67 |
| | MPa Tensile strength | 21.7 | 21.5 |
| | 300% stressMPa | 10.9 | 11.0 |
| | Elongation at break% | 470 | 475 |
| Rubber making process | | Heavy powder dust Time-consuming | No powder during rubber making, time-saving |

(9-3). Purpose: the composite product with regeneration rubber from this implementation case can be used as material for tire rubber.

### Implementation case 10

(10-1) Preparations: obtain 20-30-mesh rough powder on waste tire with fiber and steel wire removed, 9 unit, and divert material into a sealed mixing heating vessel; put in environmental softener and powder material, whose composition: softener 12 unit, specifically include: naphthene oil 7 unit, coumarone 1.5 unit, paraffin 1 unit, stearic acid 2.5 unit; antioxidant 0.1 unit, with varieties, 2, 6-BHT; water 1.2 unit. The addition order of rough powder and reagent can be reversed. The weight ratio of rough powder and environmental softener is 100/133.33. After addition, close addition door, open suction and discharge valve; replace air in the vessel by charging and discharging steel bottled nitrogen for approximately 5 mins. Heat to 240°C and stop heating when the vessel pressure at 2.0MPa and insulate for 30 m. Open drain valve of mixing heating vessel. Recycle the waste heat and make it pass through waste removal composite device to realize target-compliance discharge; close drain valve and reserve some pressure for the mixing heating vessel to facilitate material discharge. The syrup-shaped material after insulation treatment is diverted into another sealed mixing tank with cooling medium jacket; before it is put into cooling mixing vessel, firstly add powder material in the sealed cooling mixing vessel; during putting in material, mixing while cooling with water; when the syrup-shaped material is put into cooling mixing vessel, close the entry door. The weight ratio of rough powder and powder material is 100/1500, specifically: N774, carbon black 25 unit, N330, carbon black 25unit, light calcium carbonate 36 unit, figuline 49 unit. when the discharged material is cooled below 40°C,the said composite product with regeneration rubber is produced. The loose cake-shaped material can be diverted into high speed mixing machinery with jacket cooling medium; the parcel-like rubber material is input into material warehouse for central packing. The produced product is parcel-like composite product with regeneration rubber and high-dosage environmental softener and powder material.

### (10-2) Detection comparison:

| Formula | | Baseline rubber material | Composite product of measured Implementation case 10 |
|---|---|---|---|
| Two comparison rubber with same constituent and equal weight | Natural rubber (No.4 smoke sheet) | 100 | 100 |
| | Zinc oxide | 10 | 10 |
| | Anti-ager D | 1.5 | 1.5 |
| | AccelerantM | 0.75 | 0.75 |
| | AccelerantDM | 0.9 | 0.9 |
| | AccelerantD | 0.5 | 0.5 |
| | Sulfur | 2.8 | 2.8 |
| Baseline constituent aggregate | In compliance with Level I regeneration rubber as per r Regeneration Rubber GB/T 13460-2008 | 10 | / |
| | Stearic acid | 2.5 | / |
| | Pine tar | 6.25 | / |
| | Pitch | 2 | / |
| | N330Carbon black | 25 | / |
| | N774 Carbon black | 25 | / |
| | Light calcium carbonate | 36 | |
| | Figuline | 49 | |
| Measured material | Composite of measured Implementation case 10 | / | 155.75 |
| Total (unit) | | 272.2 | 272.2 |
| Vulcanized condition | 158°C × 12min | | |
| Detection data | Hardness (Shore A) deg | 69 | 68 |
| | Tensile strength MPa | 12.34 | 13.00 |
| | Elongation at break% | 300 | 310 |
| Rubber making process | | Heavy powder dust Time-consuming | No powder during rubber making, time-saving |

(10-3) Purpose: the composite product with regeneration rubber from this implementation case can be used as material for coverage rubber of ordinary triangle belt.

### Implementation case 11

(11-1). Preparations: obtain 20-30-mesh rough powder on waste tire with fiber and steel wire removed, 9 unit, and divert material into a sealed mixing heating vessel; put in environmental softener and powder material, whose composition: softener 34 unit, specifically include: naphthene oil 28 unit, coumarone 5 unit, stearic acid 1 unit; antioxidant 0.1 unit, with varieties, 2, 6-BHT; water 24 unit. The addition order of rough powder and reagent can be reversed. The weight ratio of rough powder and environmental softener is 100/17. After addition, close addition door, open suction and discharge valve; replace air in the vessel by charging and discharging steel bottled nitrogen for approximately 5 mins. Heat to 240°C and stop heating when the vessel pressure at 2.0MPa and insulate for 30 m. Open drain valve of mixing heating vessel. Recycle the waste heat and make it pass through waste removal composite device to realize target-compliance discharge; close drain valve and reserve some pressure for the mixing heating vessel to facilitate material discharge. The syrup-shaped material after insulation treatment is diverted into another sealed mixing tank with cooling medium jacket; before it is put into cooling mixing vessel, firstly add powder material in the sealed cooling mixing vessel; during putting in material, mixing while cooling with water; when the syrup-shaped material is put into cooling mixing vessel, close the entry door. The weight ratio of rough powder and powder material is 100/134, specifically: N774, carbon black 35 unit, N330, carbon black 33 unit, 40-60-mesh scrap rubber powder 200 unit. When the discharged material is cooled below 40°C, the said composite product with regeneration rubber is produced. The loose cake-shaped material can be diverted into high speed mixing machinery with jacket cooling medium; the parcel-like rubber material is input into material warehouse for central packing. The produced product is parcel-like composite product with regeneration rubber and high-dosage environmental softener and powder material.

### (11-2) Detection comparison:

| Formula: | | Baseline rubber material | Composite product of measured Implementation case 11 |
|---|---|---|---|
| Two comparison rubber with same constituent and equal weight | SBR (1500) | 20 | 20 |
| | Zinc oxide | 4 | 4 |
| | Anti-agerA | 1 | 1 |
| | AccelerantD | 0.1 | 0.1 |
| | AccelerantDM | 0.8 | 0.8 |
| | Sulfur | 5 | 5 |
| Baseline constituent aggregate | In compliance with Level I regeneration rubber as per r Regeneration Rubber GB/T 13460 -2008 | 230 | / |
| | Stearic acid | 1 | / |
| | Pine tar | 5.5 | / |
| | Pitch | 7.5 | / |
| | N330 carbon black | 33 | / |
| | N774 carbon black | 35 | / |
| | Figuline | 40 | |
| Measured material | Composite of measured Implementation case 11 | / | 351 |
| Total (unit) | | 582.9 | 582.9 |
| Vulcanized condition | 158°C × 15min | | |
| Detection data | Hardness (Shore A) deg | 70 | 74 |
| | Tensile strengthMPa | 7.7 | 8 |
| | Elongation at break% | 290 | 290 |
| Rubber making process | | Heavy powder dust Time-consuming | No powder during rubber making, time-saving |

(11-3). Purpose: the composite product with regeneration rubber from this implementation case can be used as material for bottom mat rubber of sleeper.

### Implementation case 12

(12-1). Preparation: divert the mixture of 20-30-mesh rough powder of waste rubber, 140 unit, softener and powder material into a heating screw extruder; the weight ratio of rough powder of waste rubber to environmental softener is 100/45, specifically include: naphthene oil 15 unit, machinery oil 20 unit, oxidized odorless pitch 25 unit, paraffin 2 unit, stearic acid; the weight ratio of rough powder of waste rubber to powder material is 100/250, specifically include: light calcium carbonate 300 unit, 100-mesh (rubber powder of waste tire/carbon black from waste rubber via thermal cracking=3/2) 50 unit; mixture of rough powder and various reagents can be extruded - 200°C heating section; when the material comes out of thermal screw extruder, it comes out of rapid water cooling chamber to be grinded. When the grinding material is cooled down to ~100°C, the cooled material is diverted into mixing refinery machinery with medium cooling; when the discharged material is cooled to below 40°C, it can be directly used or packed for use after normalization treatment and the obtained product is composite product with regeneration rubber;

### (12-2) Detection comparison:

| Formula | | Baseline rubber material | Composite product of measured Implementation case 12 |
|---|---|---|---|
| Two comparison rubber with same constituent and equal weight | Natural rubber (creased slice) | 20 | 20 |
| | Zinc oxide | 3 | 3 |
| | AccelerantD | 0.25 | 0.25 |
| | AccelerantCZ | 0.5 | 0.5 |
| | Sulfur | 3 | 3 |
| Baseline constituent aggregate | In compliance with Pass level regeneration rubber as per r Regeneration Rubber GB/T 13460- | 160 | / |
| | Stearic acid | 1 | / |
| | Paraffin | 2 | |
| | Mineral oil | 20 | / |
| | Pitch | 25 | / |
| | N550 Carbon black | 20 | / |
| | Rubber powder of waste tire | 30 | / |
| | Light calcium carbonate | 300 | |
| Measured | Composite of measured | / | 558 |
| material | Implementation case 12 | | |
| Total (unit) | | 584.75 | 584.75 |
| Vulcanized condition | 153°C × 10min | | |
| Detection data | Hardness (Shore A) deg | 72 | 73 |
| | Tensile strength MPa | 2.1 | 2.2 |
| | Elongation at break% | 160 | 160 |
| Rubber making process | | Heavy powder dust Time-consuming | No powder during rubber making, time-saving |

(12-3). Purpose: the composite product with regeneration rubber from this implementation case can be used as material for automobile fender.

The above implementation cases 1 to 12 are very good implementation examples of applications of composite products with regeneration rubber. Quality of measured material as per various implementation cases shall not be lower than the baseline constituent aggregate thereof; qualitative conversion on the market value of measured material can be made based on market price of corresponding baseline constituent aggregate; in combination with differential of energy consumption and environmental fees of the measured material and rubber making of baseline constituent aggregate, various traders can make fair pricing on composite product with regeneration rubber.

Based on the detection results of the aforesaid implementation cases 1 to 12, it can be found out that quality level of hydrocarbon chain of regeneration rubber will not be degraded due to dilution in rubber material.

### Implementation case 13

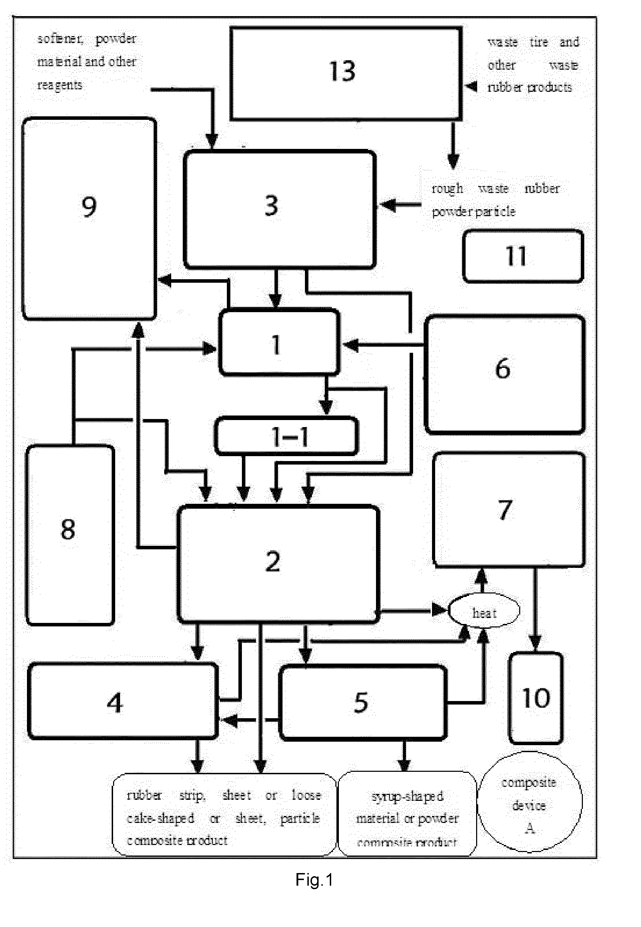

The figure 1 is One Schematic Block Diagram of Composite Device A for the Said New Process A of Thermal Regeneration for Waste Tire and Other Waste Rubber; the whole composite device A specifically includes: complete composite equipment 13 for making 5~40-mesh rough powder particle by pretreating waste tire and other waste rubber product, unit machinery or composite machinery 1 for mixing and heating rough powder particle and softener or softener and powder material, the discharge of unit or composite equipment 1 is serially connected with filter rubber or refined screw and other well-known unit machinery 1-1, unit or composite machinery 2 for mixing, cooling or repowdering hot mixture of waste rubber and softener, rubber unit machinery 4 with grinding, refinery and mixing refinery function, unit machinery 5 for strong mixing of powder material, electric heating or fuel furnace device 6 to provide heat to unit or composite machinery 1, cooling device 7 to removal heat from unit or composite machinery 2 or/and 4 or/and 5, feed composite machinery 3 for supplying rough powder particle or/and reagent, material to unit or composite machinery 1 or/and 2, nitrogen source device 8 for supplying unit or composite machinery 1 or/and 2, exhaust adsorption or/and recycling device 9 for unit or composite machinery 1 or/and 2, waste energy utilization system 10, automatic control system 11.

Complete composite equipment, unit or composite machinery, device and system are well-known product or made with well-known technology;

In response to the invention characteristics, more specifically, the unit or composite machinery 1 mentioned in the implementation case can be well-known product, which can be more or more than one mixes as follows:
High pressure dynamic desulphrization vessel (DTY) made by Gaomi Yongjin Machinery Science & Technology Co., Ltd, heating homogenizing mixing vessel for modified asphalt of waste rubber supplied by Shanghai Eka Electromechanic Manufacture Co., Ltd; complete equipment of modified asphalt of waste tire development by Xinye company;

The unit or composite machinery 2 mentioned in the implementation case can be well-known product, which can be more or more than one mixes as follows:
Universal chemical sealing mixing and cooling pressure pot, universal cooling pressure powder mixing trough, rubber and powder mixer in rubber making industry, sealed cooling dough mixer in food industry, sealed cooling dough mixer in feed industry, etc;

The unit or composite machinery 3 mentioned in the implementation case can be well-known product, which can be more or more than one mixes as follows:
Consist of hopper, delivery tube, measuring gauge, automatic control circuit, control software: distributor with auto distribution weighing system made by Ningbo Shenke Industrial Weighing Technology Co., Ltd., complete automation control system made by Rushan Shende Feed Machinery Co., Ltd., weighing distribution system for rubber industry made by Shanghai Bedhang Industrial Automation, automatic rubber distribution system made by Changzhou Kehang company, etc;

As per this implementation case, the discharged material from composite device A (4) can be rubber strip, sheet, particle composite product; the discharged material from composite device A (2) can be loose cakes-shaped composite product; the discharged material from composite device A (5) can be syrup-shaped or powder composite product.

### Implementation 14

The figure 1 is Another Schematic Block Diagram of Composite Device A for the Said New Process A of Thermal Regeneration for Waste Tire and Other Waste Rubber; the whole composite device A specifically includes: complete composite equipment 13 for making 5-40-mesh rough powder particle by pretreating waste tire and other waste rubber product, unit machinery or composite machinery 12 for mixing and heating 5-40-mesh rough powder particle and softener or softener and powder material, the discharge of unit or composite equipment 12 is equipped with oxygen-free, sealed sudden water cooling chamber 12-1, the discharge of the said 12-1 is equipped with screw extruder unit machinery 4 with grinding, refinery and mixing refinery function, electric heating or fuel furnace device 6 to provide heat to unit or composite machinery 12, cooling device 7 to removal heat from screw extruder unit machinery 4, air cooling and collection device 14 to remove humidity and steam from screw extruder unit machinery 4, feed composite machinery 3 for supplying rough powder particle or/and reagent to composite device 12, grinding mechanism 12-2 for extrusion rubber material in rapid water cooling device 12-1, exhaust adsorption or/and recycling device 9 for composite device 12 or/and 12-1, waste energy utilization system 10.

The discharged material from the said composite device 14 can be lump particle composite product.

The said complete composite device, unit machinery or composite machinery, device and system can be well-known product or made with well-known technology.

### Implementation case 15

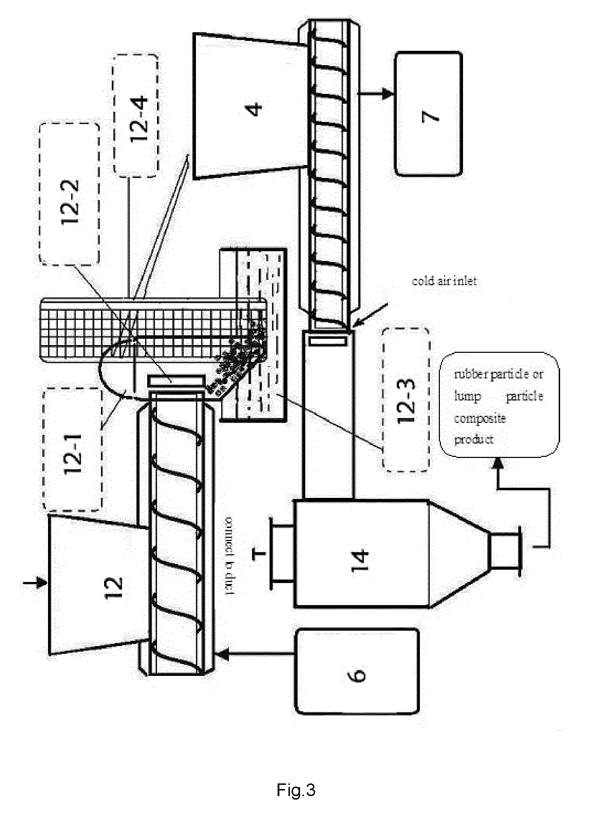

Figure 3 is Schematic Drawing of Extruder Composite Equipment contained in the Said Composite Device A; its characteristics: the discharge of the heating extruder is equipped with sealed rapid water cooling device, which can make the workshop free from smelly hot steam by prevent sudden oxidization of extruded material by air under high temperature;

For the said composite device 12, besides the screw extruder unit machinery with heating and mixing refinery function, it can also include: oxygen-free sealed rapid water cooling chamber 12-1, screw extruder unit machinery 4 with water cooling jacket for refinery or mixing refinery function, air cooling and collection device 14 to remove humidity and steam from screw extruder unit machinery, grinding mechanism 12-2 inside rapid water cooling device 12-1, electric heating or fuel furnace device 6 for supplying heat to heating screw extruder unit machinery, cooling device 7 to remove heat from unit machinery 4, cycling cooling water lute pool 12-3, rubber material drainage roller sieve 12-4, etc.

The discharged material from the said composite device 14 can be rubber particle or lump particle composite product.

### Implementation case 16

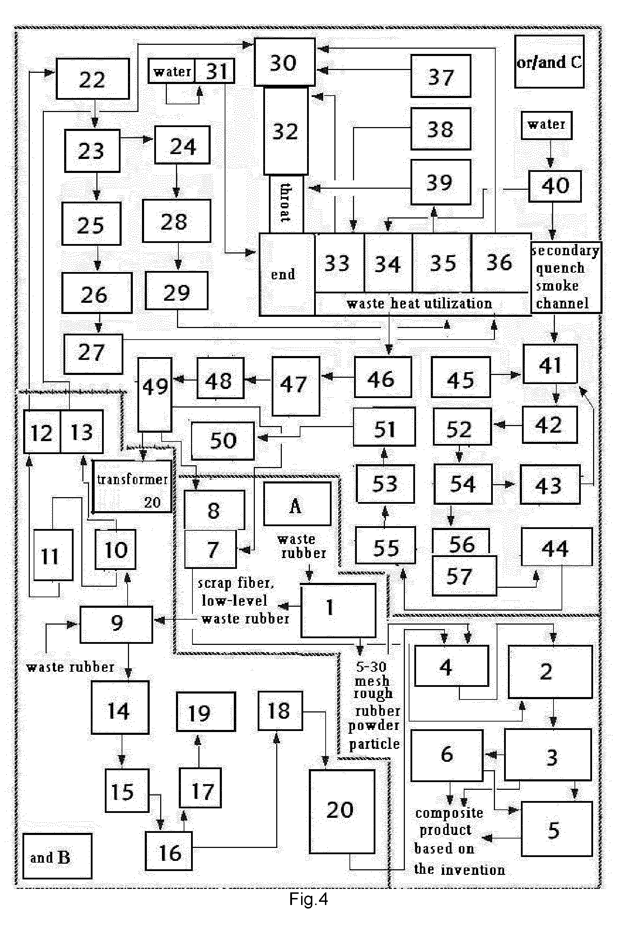

Figure 4 is Schematic Drawing of the Said Thermal Regeneration and Thermal Cracking of Waste Rubber and Composite Device for Combined Production with Ordinary Carbon Black, its characteristics: the composite device A for thermal regeneration of waste rubber, composite device B for extracting fuel oil, gas carbon black or/and filler from waste rubber via thermal cracking and composite device C for making carbon black from fuel oil, gas via thermal cracking are integrated; the composite device can specifically include:

Composite device A, thereinto, it includes: complete composite device 1 for rough powder particle processing, composite machinery 2 for mixing and heating, composite machinery 3 for mixing and powdering, feed composite machinery 4, grinding, mixing refining and refinery machinery 5, machinery for strong mixing of powder material, steam package 7, supply transformer 8, etc;

Composite device B, thereinto, it includes: thermal cracking furnace of waste tire 9, cooler 10, oil and water separator 11, oil tank 12, gas storage tank 12, rough carbon black silo 14, rough grinder 15, vibration sieve 16, magnetic separator 17, finished grinder 18, steel wire collector 19, less than 500-mesh super fine carbon black silo 20, supply transformer 21, etc;

Composite device C, thereinto, it includes: raw oil dehydration vessel 22, oil pump 23, raw oil vessel 24, fuel oil vessel 25, fuel oil filter 26, fuel pump 27, raw oil filter 28, raw oil pump 29, nebulizer 30, water pump 31, combustion section of carbon black reaction furnace 32, air pre-heater 33, waste heat boiler 34, raw oil pre-heater 35, fuel oil pre-heater 36, compressed air 37, main air fan 38, raw oil nozzle 39, pump 40, main filter bag 41, bag filter funnel 42, cyclone separator 43, wet granulator 44, counter blower 45, steam package 46, waste heat boiler 47, steam package 48, steam turbine generator 49, storage tank 50, finished product conveyor 51, filter seal valve 52, separator 53, micro grinder 54, dryer 55, funnel 56, main feed conveyor 57, etc.

Connection characteristics between composite device A, B, C shall at least include:
(16-1) Among feed composite machinery 4 of composite device A, super fine carbon black silo 20 of B, carbon black storage vessel 50 of C, there is mechanism to supply carbon black from B, C to A, the said mechanism includes one mix or more than one mixes of delivery pipeline, delivery conveyor and vehicle;
(16-2) Among supply transformer 8 of composite device A, supply transformer 21 of B, steam turbine generator 49 of C, there is cable to supply power from C to A, B;
(16-3) Between steam package 7 of composite device A and steam turbine generator 49 of C, there is pipeline to supply low pressure steam from C to A;
(16-4) Between rough powder particle complete composite device 1 of composite device A and waste tire thermal cracking furnace 9 of B, there is mechanism to supply scrap fiber, low-level waste rubber from A to B; the said mechanism includes one mix or more than one mixes of delivery pipeline, delivery conveyor and vehicle;

Based on the inventor's aforesaid descriptions, the technicians concerned may have a picture that this invention's novelty at least lies in: the convention heat-based regeneration of waste rubber focuses on high indicator of recovery under the precondition of higher rubber hydrocarbon content; regarding latest heat-based regeneration ofwaste rubber, some of which apply patents on using environmental softener, high-dosage (polluted) softener, high dosage carbon black. However, due to restriction of biased consensus, this inventor has blazed a trail in proposing the scheme that when the obtained composite product with regeneration rubber by adding high dosage environmental softener or/and powder material to realize aggregate of regeneration rubber, softener and powder material as well as environmental transformation. Under the existing heat-based regeneration of waste rubber, the high dosage addition of powder material, in particular, carbon black, the addition is open artificial operation. In order to make the weight ratio of waste rubber/environmental softener/powder material adapted to wide range of 100/8~150/20~1500, the inventor firstly proposes the scheme of sealed mechanic operation during material feed. This inventor also attaches importance to the implementation of new method. In terms of correlation of related industries (thermal cracking of waste rubber, production of ordinary carbon black), realize adequate cooperation and enhance clean, value addition and waste energy utilization level of rated industries.

This invention's creativities at least lies in: make improvement based on high temperature, short duration and other core characteristics of heat-based regeneration of 5-40-mesh rough rubber powder so that the heat-based regeneration of waste rubber is more clean, low energy-consuming and covers more materials to be regeneration. Besides the original edge, its application is more environment friendly, energy saving and extensive in downstream coverage.

This invention's practicability lies in: this invention applies to not only varieties of waste rubber that are most difficult to handle, including waste tire, comprehensive utilization of low rubber content or/and mixed waste rubber product, but also special regeneration rubber, such as waste nitrile rubber, waste EPDM, waste halogenated butyl rubber and chloroprene rubber. The regeneration quality production of waste rubber with high cost performance ratio can simultaneously increase economic interests of producers and downstream users. It thoroughly eradicates pollution of the regeneration rubber industry. Besides, powder dust of downstream users can be disposed from the source outside the factory; the resources recycling scheme of waste rubber featuring full quota, high value, greening and energy saving is endowed with new meaning. A new path is provided for the rubber industrial chain in resolving major difficulties.

The specific implementation mode illustrated via implementation case further describes this invention, which only felicitates understanding and invention by common technicians. The technicians conversant with this field can easily make changes on specific implementation modes, such as modification on addition ratio, etc and apply specific implementation mode of this invention into other implementation mode. For example, regarding one or more than one mixes of waste nitrile rubber, waste EPDM, waste halogenated butyl rubber and chloroprene rubber, as per this invention's technical scheme and like dissolution like principle, within the definition scope of softener and powder material, select powder material, etc according to maximization principle required by downstream users. The creative effort is not required in the specific implementation mode. Therefore, this invention is not restricted to these specific implementation mode; any modifications on specific implementation mode under framework of this technical scheme made by technicians concerned shall fall into protection scope of this invention.

## Claims

1. A method of thermal regeneration of waste rubber, whose characteristics are as follows:
the said "thermal regeneration" process A, include: add 5~40-mesh rough powder particle of waste rubber/environmental softener/powder material with weight ratio ranging among 100/8~150/20~1500 into mixing heater; first carry out oxygen-free heating and then divert into mixing cooler to cool below 100°C; the discharge material is product; or set aside some or all powder material and then slowly add into mixing heater or/and add the same when the hot material has been diverted into mixing cooler; when the mixture has been cooled below 100°C, the discharged material is product; after initial mixing of the prepared material, directly divert the same into screw extruder and heat to 200°C~300°C and get into mixing section; when the mixture has been cooled below 100°C, the discharged material is product;
or, establish material or/and energy multiple transfer relation among process A, well-known thermal cracking of waste rubber B and production of ordinary carbon black from fuel oil or/and fuel gas through thermal cracking.

2. The method of claim 1, wherein: for the said environmental softener, the content of PAHs doesn't exceed 3%wt at most, varieties of said environmental softener shall at least include:
mix of one or more than variety of environmental rubber filler oil, naphthenic oil, machinery oil, paraffin, white oil, vaseline, third line distillate, sixth line distillate, transformer oil, low molecular, polyolefin wax, dioctyl phthalate, dibutyl phthalate, tricresyl phosphate, DOS, diglycol, C4~18 fatty acid, stearic acid, palmitic acid, oil acid, palm acid, niger, plant oil, or/and mix of one or more than one glycerol, non-odorous pitch, modified rubber powder asphalt, rosin, hydrogenation rosin, dehydrogenated rosin, ester gum, xylene rosin resin, abietate, alkyl phenolic resin, terpene resin, petroleum resin, special octyl phenol resin, coumarone, styrol resin, polyethylene resin, polypropylene resin, glycidyl fat, vinyl acetate copolymer, PBS and miscellaneous waste plastics.

3. The method of claim 1, wherein: for the said powder material, varieties of said powder material shall at least include:
reinforcing agent for rubber, including: mix of one ore more than one carbon black, carbon fiber, white carbon black, super fine calcium carbonate;
or/and filler for rubber, including but not limited to: mix of one or more than one varieties of powder coal dust, calcium carbonate, fiber, graphite, heavy calcium carbonate, light calcium carbonate, kaoline, acid white soil, bentonite, figuline, attapulgite, stone powder, quartzite, vermiculite, brucite, aluminium hydroxide, dolomite, plaster, calcite, feldspar, Silk stone, montmorillonite, perlite, opal, diatomite, mica, coal powder, slabstone.
or/and powder material for rubber, including: any one variety of zinc oxide, magnesia, less than 100-mesh vulcanized rubber powder.

4. The method of claim 1, wherein: the involved "entry mixing heater", "entry mixing cooler", "initial mixing", "entry screw extruder" shall be clean operation; for the said clean operation, it's best to adopt sealed mechanic operation.

5. The method of claim 1, wherein: the said "oxygen-free heating" means that during heating, one or more than one oxygen elimination measures are adopted:
(5-1). Prevent rubber material from contact air with oxygen when heating above 100°C;
(5-2). Before heating sealed vessel, vacuum the vessel with material;
(5-3). Charge nitrogen into sealed vessel;
(5-4). Add water or steam into vessel;
(5-5). Add into reagent or cooling water contacting rubber material chemical antioxidant, whose typical varieties shall at least include: mix of one or more than one varieties of oxalic acid, oxalate, hydroquinone, BHT,dialkyl hydroquinone, alkyl paracetamol, 4[β- (3, 5- ditertbutyl 4- hydroxy - phenyl) methylacetic] Dipentaerythritol ester, β (3, 5-) ditertbutyl4- hydroxy - phenyl propionic acid ester 18;
the typical "heating" operation shall at least include: gauge pressure 0.0~3.0MPa, heating to 160°C ~260°C, mix material with temperature at 160°C ~260°C, insulation and stay 0.2~3 h.

6. The method of claim 3, wherein: the said carbon black can be secondary regeneration carbon black from waste tire and other waste rubber, new carbon black made from oil and fuel gas and carbon black made from agricultural plant straw, shell.

7. The obtained composite product with regeneration rubber and application thereof according to any one of the methods of claims 1 to 5.
